# EUROPEAN PATENT APPLICATION

(11) **EP 4 501 510 A1**
(43) Date of publication of application: **05.02.2025**
(21) Application number: 23778923.5
(22) Date of filing: 13.02.2023
(51) Int. Cl.: B23K 9/095, B23K 9/10, B23K 9/12, B23K 9/127, B23K 31/00

(54) **WELDING CONTROL METHOD FOR AUTOMATIC WELDING, CONTROL DEVICE, WELDING SYSTEM, PROGRAM, AND WELDING METHOD**

(30) Priority: 30.03.2022 JP 2022057504
(71) Applicant: KABUSHIKI KAISHA KOBE SEIKO SHO (KOBE STEEL, LTD.), Hyogo 651-8585 (JP)
(72) Inventor: OZAKI, Keita, Hyogo 651-2271 (JP); YOSHIMOTO, Tatsuya, Hyogo 651-2271 (JP); FURUKAWA, Naohide, Kanagawa 251-8551 (JP)
(74) Representative: Müller-Boré & Partner Patentanwälte PartG mbB
(86) International application number: PCT/JP2023/004866
(87) International publication number: WO 2023/188889

(57) **Abstract**

A welding control method for welding to form a molten pool, the method including: an acquisition step for acquiring image data including the molten pool; an identifying step for identifying, on the basis of the acquired image data, a plurality of feature points near a boundary between the molten pool and an unmolten portion at least on the side in the direction of welding progress; a calculating step for calculating geometric quantity data on the basis of information about the plurality of feature points; a determining step for determining whether a weld is appropriate or inappropriate on the basis of the geometric quantity data and a predetermined threshold value; and a correcting step for correcting the welding conditions on the basis of a result of the determination in the determining step.

## Description

### Technical Field

The present invention relates to a welding control method for automatic welding, a control device, a welding system, a program, and a welding method.

### Background Art

In recent years, from the viewpoint of saving of labor and manpower, stability of welding quality, improvement of productivity and efficiency, automation of welding operations is called for regardless of industries. However, there are a weld portion and a position for which welding is difficult without a manual operation, which prevents automation of welding. The weld portion for which welding is difficult is, for example, the first layer of one-side welding which needs to be performed with molten metal passed over a root portion. The position for which welding is difficult includes horizontal position, vertical position and overhead position which are called difficult positions in general.

For such a welding situation in which automation of welding is difficult to be implemented, PTL 1 is cited as a conventional technique which enables an automatic welding system. PTL 1 discloses a configuration in which in a horizontally extending groove formed between two members to be welded arranged in a vertical direction, let the welding travel direction be forward direction, then automatic welding is possible in one-side welding and in horizontal position by a system including: a welding robot configured to perform arc welding while weaving a welding torch alternately in a forward lower direction and a rearward upper direction; a camera configured to capture an arc and a molten pool generated in the groove by the arc welding; a detection unit configured to detect the position of the distal end of the molten pool in a camera image captured by the camera; and a decider configured to, when the distance between the arc and the distal end of the molten pool is in a predetermined range, decide an amount of correction on a welding speed based on the distance.

### Citation List

### Patent Literature

PTL 1: Japanese Unexamined Patent Application Publication No. 2021-79444

### Summary of Invention

### Technical Problem

However, the reason why automation is difficult is the presence of disturbance other the weld portion and position mentioned above, and the disturbance may occur at the site of welding, but the effect of disturbance is not taken into consideration in PTL 1. Note that the disturbances in welding include, for example, misalignment of a work, decrease in gas flow rate, magnetic arc blow, instability of wire feeding, instability of current supply, oil adhesion to a work, and rust of a work. These factors all have an effect on the behavior of a molten pool, and influence the level of welding quality. For example, when misalignment of a work occurs in one-side welding and in horizontal position in PTL 1, together with the gravitational effect, passing of welding metal over a root portion may fail in the welding of the first layer. Therefore, automatic welding is called for, which works regardless of the weld portion and position, and additionally, can ensure good welding quality even in a situation where disturbance may occur.

Also, for part of disturbances, such as misalignment of the work, counter measures such as touch sensing can be taken to grasp the situation in advance before welding, but in this case, the number of sensing points increases, and particularly, for long welding, the welding work efficiency is reduced. Thus, automatic welding capable of determining a disturbance in real time is also called for.

Thus, it is an object of the present invention to provide a welding control method, a control device, a welding system, a program, and a welding method for automatic welding that are capable of ensuring welding quality and achieving good welding work efficiency even in a welding situation where disturbance occurs. Solution to Problem

In order to solve the above-mentioned problem, the present invention has the following configuration.

Specifically, a welding control method for welding to form a molten pool, the welding control method including:
an acquisition step for acquiring image data including the molten pool;
an identifying step for identifying, based on the acquired image data, a plurality of feature points near a boundary between the molten pool and an unmolten portion at least on a side in a welding travel direction;
a calculating step for calculating geometric quantity data based on information about the plurality of feature points;
a determining step for determining whether a weld is appropriate or inappropriate based on the geometric quantity data and a predetermined threshold value; and
a correcting step for correcting a welding condition based on a result of the determination in the determining step.

In addition, the present invention according to another aspect has the following configuration.

Specifically, a control device for controlling welding condition for welding to form a molten pool, the control device including:
an acquisition unit configured to acquire image data including the molten pool;
an identifying unit configured to identify, based on the acquired image data, a plurality of feature points near a boundary between the molten pool and an unmolten portion at least on a side in a welding travel direction;
a calculating unit configured to calculate geometric quantity data based on information about the plurality of feature points;
a determining unit configured to determine whether a weld is appropriate or inappropriate based on the geometric quantity data and a predetermined threshold value; and
a correcting unit configured to correct a welding condition based on a result of the determination by the determining unit.

In addition, the present invention according to another aspect has the following configuration.

Specifically, a welding system comprising a control device for controlling welding condition for welding to form a molten pool, the control device including:
an acquisition unit configured to acquire image data including the molten pool;
an identifying unit configured to identify, based on the acquired image data, a plurality of feature points near a boundary between the molten pool and an unmolten portion at least on a side in a welding travel direction;
a calculating unit configured to calculate geometric quantity data based on information about the plurality of feature points;
a determining unit configured to determine whether a weld is appropriate or inappropriate based on the geometric quantity data and a predetermined threshold value; and
a correcting unit configured to correct a welding condition based on a result of the determination by the determining unit.

In addition, the present invention according to another aspect has the following configuration.

Specifically, a program causing a computer to execute a process including:
an acquisition step for acquiring image data including a molten pool which is generated at time of welding;
an identifying step for identifying, based on the acquired image data, a plurality of feature points near a boundary between the molten pool and an unmolten portion at least on a side in a welding travel direction;
a calculating step for calculating geometric quantity data based on information about the plurality of feature points;
a determining step for determining whether a weld is appropriate or inappropriate based on the geometric quantity data and a predetermined threshold value; and
a correcting step for correcting welding condition based on a result of the determination in the determining step.

In addition, the present invention according to another aspect has the following configuration.

Specifically, a welding method comprising a control step for performing welding using a welding condition corrected by the welding control method, the welding control method including:
an acquisition step for acquiring image data including the molten pool;
an identifying step for identifying, based on the acquired image data, a plurality of feature points near a boundary between the molten pool and an unmolten portion at least on a side in a welding travel direction;
a calculating step for calculating geometric quantity data based on information about the plurality of feature points;
a determining step for determining whether a weld is appropriate or inappropriate based on the geometric quantity data and a predetermined threshold value; and
a correcting step for correcting a welding condition based on a result of the determination in the determining step.

### Advantageous Effects of Invention

According to the present invention, welding quality can be ensured, and automatic welding with good welding work efficiency can be achieved even in a welding situation where disturbance occurs.

### Brief Description of Drawings

[Fig. 1] Fig. 1 is a schematic view illustrating a configuration example of a welding system according to an embodiment of the present invention.
[Fig. 2] Fig. 2 is a schematic view illustrating a configuration example of a portable welding robot according to the embodiment of the present invention.
[Fig. 3] Fig. 3 is a schematic view illustrating a configuration example of the portable welding robot according to the embodiment of the present invention.
[Fig. 4] Fig. 4 is a schematic view illustrating a configuration example of a welding torch according to the embodiment of the present invention.
[Fig. 5] Fig. 5 is a perspective view illustrating the arrangement of a visual sensor according to the embodiment of the present invention.
[Fig. 6] Fig. 6 is an exemplary view illustrating an example of image data obtained by the visual sensor according to the embodiment of the present invention.
[Fig. 7] Fig. 7 is a block diagram illustrating a configuration example of a data processing device according to the embodiment of the present invention.
[Fig. 8] Fig. 8 is a conceptual diagram illustrating a learning process according to the embodiment of the present invention.
[Fig. 9] Fig. 9 is a schematic view illustrating an example of a screen used for teaching work according to the embodiment of the present invention.
[Fig. 10] Fig. 10 is a schematic view illustrating an example of a screen used for teaching work according to the embodiment of the present invention.
[Fig. 11] Fig. 11 is an exemplary view illustrating an analysis result of a welding image according to the embodiment of the present invention.
[Fig. 12] Fig. 12 is an exemplary view illustrating an analysis result of a welding image according to the embodiment of the present invention.
[Fig. 13] Fig. 13 is an exemplary view illustrating misalignment according to the embodiment of the present invention.
[Fig. 14] Fig. 14 is a schematic view illustrating feature points of a distal end inclination angle according to the embodiment of the present invention.
[Fig. 15] Fig. 15 is a graph illustrating an analysis result of a welding image according to the embodiment of the present invention.
[Fig. 16] Fig. 16 is a flowchart for a process according to the embodiment of the present invention.
[Fig. 17] Fig. 17 is a flowchart for welding control according to the embodiment of the present invention.
[Fig. 18] Fig. 18 is an exemplary view illustrating an analysis result of a welding image according to a second embodiment of the present invention.
[Fig. 19] Fig. 19 is an exemplary view illustrating an analysis result of the welding image according to the second embodiment of the present invention.
[Fig. 20] Fig. 20 is a flowchart for an abnormal determination process according to the second embodiment of the present invention.
[Fig. 21] Fig. 21 is a graph illustrating an example of time-series data according to the second embodiment of the present invention.
[Fig. 22] Fig. 22 is a graph illustrating an example of a determination result according to the second embodiment of the present invention.
[Fig. 23] Fig. 23 is a graph illustrating an example of a determination result according to the second embodiment of the present invention.

### Description of Embodiments

### <First Embodiment>

Hereinafter, a welding system according to an embodiment of the present invention will be described with reference to the drawings. In the drawings, the same components are labeled with the same reference number to indicate a correspondence relationship. This embodiment is an example of a use of a portable welding robot, and the welding system of the present invention is not limited to the configuration of this embodiment. For example, the present invention is applicable to the case of a 6-axis welding robot, a welding device having a drive unit such as a carriage, or semi-automatic welding. The type of welding includes arc welding, laser welding, electron beam welding and electroslag welding. In this embodiment, arc welding is taken as an example. Each method has characteristics of forming a molten pool, thus the present invention is not limited to the arc welding, and applicable to various welding methods, such as laser welding, and electron beam welding. Furthermore, in this embodiment, for the purpose of significantly showing the effects of the invention, as the weld portion and the position for which welding is difficult, the first layer welding of one-side welding, and the horizontal position are selected, but are not limited thereto, and the weld portion and the weld position are not particularly limited.

In this embodiment, image data includes at least a "molten pool" as the object (target) related to welding information, and feature points related to the "molten pool" are extracted. The method of extracting the feature points is not particularly limited, and in this embodiment, as described below, feature points are extracted using a learning device. In the description below related to the learning device, the "learning" or "machine learning" refers to generating a "learned model" by conducting learning using learning data and any learning algorithm. The learned model is updated in a timely manner as the learning progresses using a plurality of pieces of learning data, and even with the same input, the output will vary. Therefore, the learned model is not limited to the state at a specific time. Herein, a model used for learning is referred to as a "learning model", and a learning model that has undergone a certain amount of learning is referred to as a "learned model". A specific example of "learning data" will be described later, and the configuration thereof may be changed depending on the learning algorithm used. In addition, the learning data may include teaching data used for the learning itself, validation data used for validating a learned model, and test data used for testing a learned model. In the following description, when data related to learning is comprehensively shown, the data is referred to as the "learning data", and when data at the time of conducting learning itself is shown, the data is referred to as the "teaching data". Note that it is not intended to clearly classify the learning data into the teaching data, validation data, and test data, and for example, all learning data may be teaching data depending on learning, verification, and testing methods.

### [System Configuration]

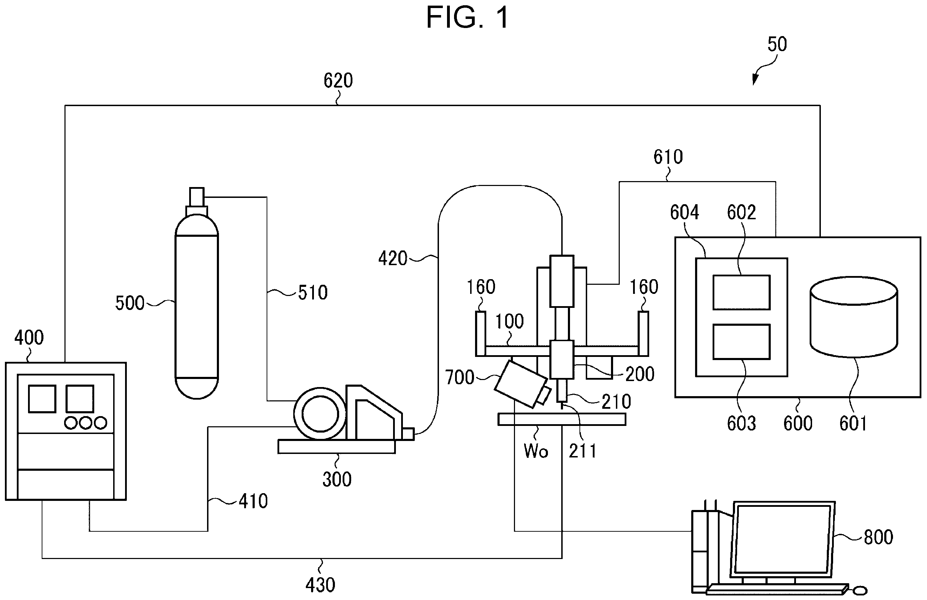

Fig. 1 is a schematic view illustrating a configuration example of a welding system according to this embodiment. As illustrated in Fig. 1, a welding system 50 includes a portable welding robot 100, a feeding device 300, a welding power supply 400, a shielding gas supply source 500, a robot control device 600, a visual sensor 700, and a data processing device 800. As described above, when the feature according to the present invention is applied to 6-axis welding robot, a welding device having a drive unit such as a carriage, or semi-automatic welding, further components may be included according to their configurations.

The robot control device 600 is coupled to the portable welding robot 100 by a robot control cable 610, and is coupled to a welding power supply 400 by a power supply control cable 620. The robot control device 600 includes a data holder 601 that holds teaching data pre-defining an operation pattern, a welding start position, a welding end position, a working condition, and a welding condition of the portable welding robot 100, and sends a command to the portable welding robot 100 and the welding power supply 400 based on the teaching data to control the operation and the welding conditions of the portable welding robot 100.

In addition, the robot control device 600 includes: a groove shape information calculating unit 602 that calculates groove shape information from detection data obtained by the later-described sensing; and a welding condition acquisition unit 603 that corrects and acquires the welding condition of the above-mentioned teaching data based on the groove shape information. The groove shape information calculating unit 602 and the welding condition acquisition unit 603 form a control unit 604.

Furthermore, the robot control device 600 may be integrally formed by a controller (hereinafter, also referred to as a "teach pendant") to perform teaching and manual operation of the portable welding robot 100, and a controller having other control functions, or may be divided into multiple parts according to their roles, such as two parts: a teach pendant and a controller having other control functions, or the robot control device 600 may be included in the portable welding robot 100. Note that from the viewpoint of usability at the site of welding, it is preferable to divide into two parts: a controller to perform teaching and manual operation of the portable welding robot 100, and a controller having other control functions. Thus, in this embodiment, division into two parts: a teach pendant and a controller having other control functions is made, and a teach pendant which is not illustrated and the robot control device 600 are connected by a communication cable. In this embodiment, the robot control cable 610 and the power supply control cable 620 are used to send a signal, but without being limited to this, a signal may be transmitted wirelessly.

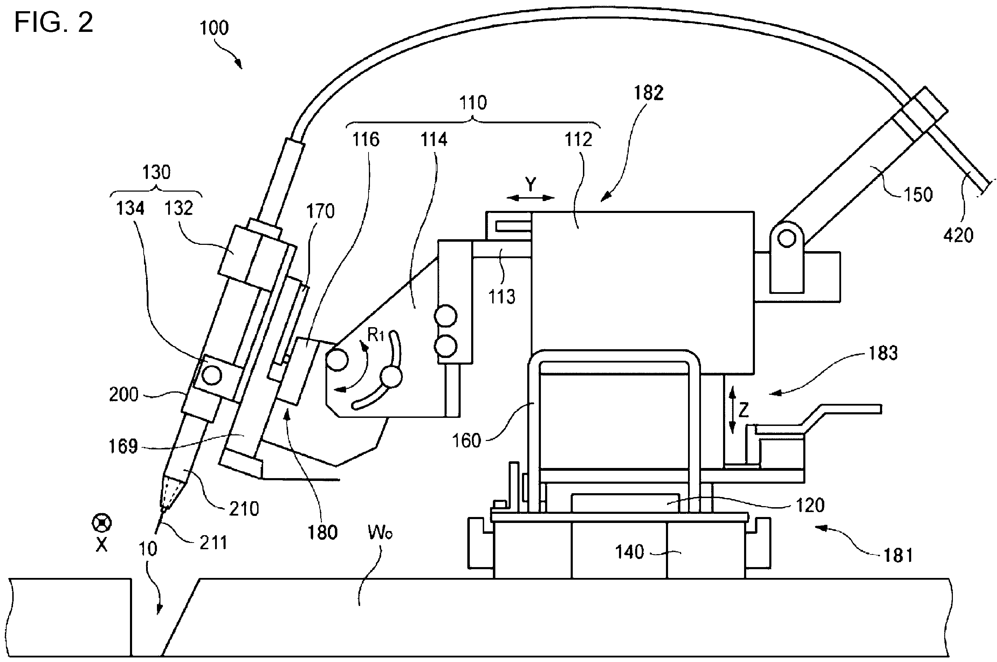

The welding power supply 400 supplies electric power to a welding wire 211 serving as a consumable electrode and work Wo by a command from the robot control device 600, thereby generating an arc between the welding wire 211 and the work Wo. The electric power from the welding power supply 400 is sent to the feeding device 300 through a power cable 410, and is sent from the feeding device 300 to a welding torch 200 through a conduit tube 420. As illustrated in Fig. 2, the electric power from the welding power supply 400 is supplied to the welding wire 211 through a contact chip at the distal end of the welding torch 200. Note that the current at the time of a welding work may be a direct current or an alternating current, and the waveform is not particularly limited. Thus, the current may be a pulse such as a rectangular wave or a triangle wave.

In the welding power supply 400, for example, the power cable 410 is connected the welding torch 200 as a positive electrode, and a power cable 430 is connected the work Wo as a negative electrode. Note that this is the case where welding is performed with reverse polarity, and when welding is performed with straight polarity, the power cable as a positive electrode may be connected to the work Wo, and the power cable as a negative electrode may be connected to the welding torch 200.

### [Shielding Gas Supply Source]

The shielding gas supply source 500 is comprised of supplementary members such as a container in which shielding gas is enclosed, and a valve. Shielding gas is delivered from the shielding gas supply source 500 to the feeding device 300 through a gas tube 510. The shielding gas delivered to the feeding device 300 is delivered to the welding torch 200 through the conduit tube 420. The shielding gas delivered to the welding torch 200 flows within the welding torch 200, and is guided to a nozzle 210, then blown out from the distal end of the welding torch 200. As the shielding gas in this embodiment, e.g., argon (Ar), carbon dioxide (CO₂) or a mixed gas thereof may be used, and welding is preferably performed with 100% CO₂ gas.

In the conduit tube 420 according to this embodiment, an electrically conducting path serving as a power cable is formed on the sheath side of the tube, and a protective tube to protect the welding wire 211 is disposed inside the tube so that the flow path of the shielding gas is formed. However, the conduit tube 420 is not limited to this, and for example, for the welding torch 200, it is possible use what is obtained by bundling a power supply cable and a shielding gas supply hose around a protective tube at the center to feed the welding wire 211. Alternatively, for example, the welding wire 211 and a tube for delivering the shielding gas, and the power cable may be separately installed.

### [Feeding Device]

The feeding device 300 feeds and delivers the welding wire 211 to the welding torch 200. The welding wire 211 fed by the feeding device 300 is not particularly limited, and selected by the properties of the work Wo and the welding form, and for example, a solid wire or a wire with flux is used. The wire diameter of the welding wire is not particularly limited, but in this embodiment a preferred wire diameter is such that the upper limit is 1.6 mm, and the lower limit is 0.9 mm.

In the conduit tube 420 according to this embodiment, an electrically conducting path serving as a power cable is formed on the sheath side of the tube, and a protective tube to protect the welding wire 211 is disposed inside the tube so that the flow path of the shielding gas is formed. However, the conduit tube 420 is not limited to this, and for example, for the welding torch 200, it is possible use what is obtained by bundling a power supply cable and a shielding gas supply hose around a protective tube at the center to feed the welding wire 211. Alternatively, for example, a tube for delivering the welding wire 211 and the shielding gas, and the power cable may be separately installed.

### [Portable Welding Robot]

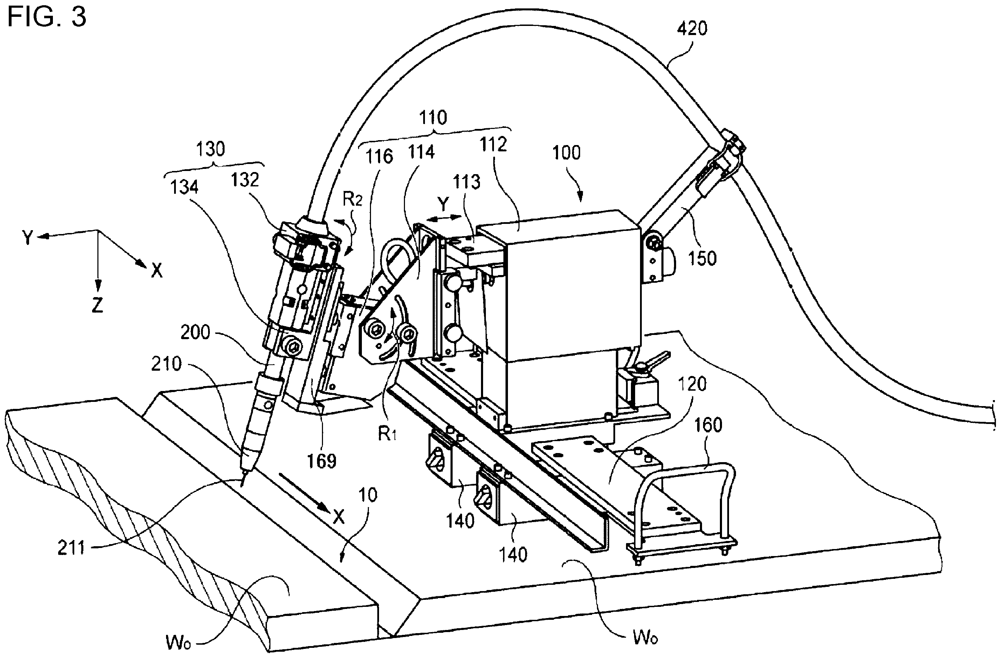

As illustrated in Fig. 2 and Fig. 3, the portable welding robot 100 includes: a guide rail 120; a robot body 110 installed on the guide rail 120 and configured to move along the guide rail 120; and a torch connector 130 installed on the robot body 110. The robot body 110 mainly includes: a main body part 112 installed on the guide rail 120; a fixed arm part 114 mounted on the main body part 112; and a welding torch rotation drive unit 116 mounted on the fixed arm part 114 rotatably in arrow R1 direction.

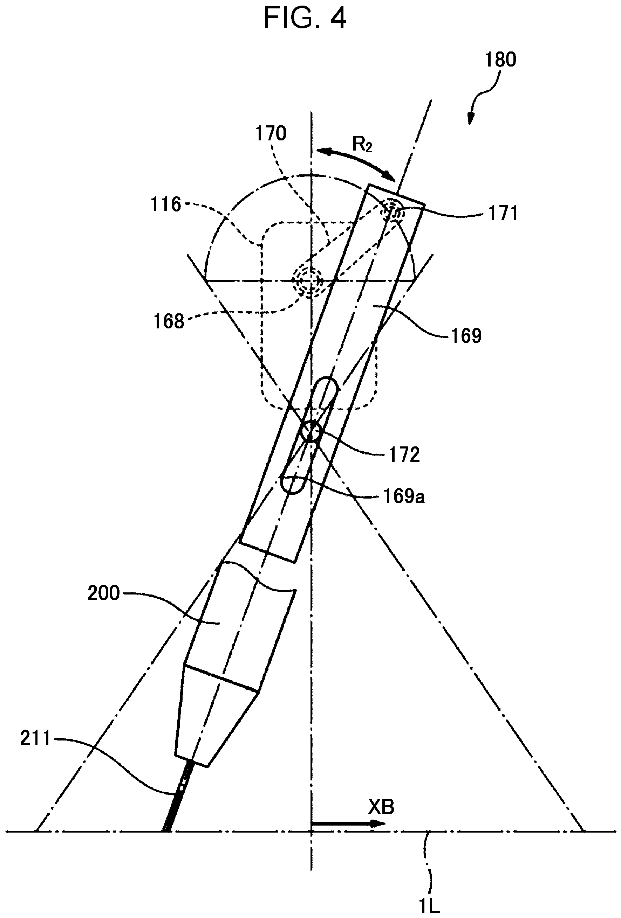

As illustrated in Fig. 4, the torch connector 130 is mounted on the welding torch rotation drive unit 116 via a sliding table 169 and a crank 170. The torch connector 130 includes a torch clamp 132 and a torch clamp 134 to fix the welding torch 200. In addition, the main body part 112 is provided with a cable clamp 150 on the side opposite to the side on which the welding torch 200 is mounted, the cable clamp 150 being configured to support the conduit tube 420 that connects the feeding device 300 and the welding torch 200.

In this embodiment, a detection means is provided which is a touch sensor to sense the surface of the groove 10 by utilizing a voltage drop phenomenon which occurs after a voltage is applied across the work Wo and the welding wire 211 and when the welding wire 211 comes into contact with the work Wo. The detection means is not limited to the touch sensor of this embodiment, and an image sensor, a laser sensor, or a combination thereof may be used; however, for the sake of simplicity of the device configuration, it is preferable to use the touch sensor in this embodiment.

As illustrated by arrow X of Fig. 2, the main body part 112 of the robot body 110 is provided with an X-axis movable mechanism 181 that moves the robot body 110 along the guide rail 120 in the X-axis direction which is a perpendicular direction to the paper surface and the weld line direction. In addition, the main body part 112 is provided with a Y-axis movable mechanism 182 that moves the fixed arm part 114 via a slide supporter 113 in Y-axis direction with respect to the main body part 112, the Y-axis direction being the width direction of the groove 10 and perpendicular to the X-axis direction and the Z-axis direction. Furthermore, the main body part 112 is provided with a Z-axis movable mechanism 183 that moves the robot body 110 in the depth direction of the groove 10 perpendicular to the X-axis direction.

Furthermore, as illustrated in Fig. 4, the sliding table 169 on which the torch connector 130 is mounted, the crank 170 and the welding torch rotation drive unit 116 constitute an approximate straight line movable mechanism 180 that moves the distal end of the welding wire 211 along an approximate straight line.

Specifically, the crank 170 is fixed to a rotation shaft 168 of a motor (not illustrated) fixed to the welding torch rotation drive unit 116, and the distal end of the crank 170 is linked to one end of the sliding table 169 by a linkage pin 171. The sliding table 169 includes a long groove 169a at an intermediate section, and a securing pin 172 fixed to the welding torch rotation drive unit 116 is slidably fitted in the long groove 169a.

Thus, when the crank 170 rotates around the rotation shaft 168 by a motor which is not illustrated, the sliding table 169 rotates around the securing pin 172 as a fulcrum, and is guided by the fitted securing pin 172 to move along the long groove 169a. Specifically, due to rotation of the crank 170 as indicated by arrow R2 shown in Fig. 3 and Fig. 4, the torch connector 130 on which the welding torch 200 is mounted drives the distal end of the welding wire 211 along the approximate straight line indicated by a virtual line IL in Fig. 4 while tilting the welding torch 200 in the X-axis direction. Note that in this embodiment, the mechanism to cause movement in the X-axis direction includes the above-mentioned X-axis movable mechanism 181 and approximate straight line movable mechanism 180, and hereinafter, when a description is given with these mechanisms distinguished, movement made in the X-axis direction by the X-axis movable mechanism 181 is indicated by "XA-axis direction", movement made in the X-axis direction by the approximate straight line movable mechanism 180 is indicated by "XB-axis direction", and when the movable mechanism is not particularly specified, it is simply indicated by "X-axis direction", and a description is given.

As indicated by arrow R1 in Fig. 2, the welding torch rotation drive unit 116 is rotatably mounted with respect to the fixed arm part 114, and can be adjusted to an optimal angle and fixed.

As described above, for three directions, that is, the X-axis direction, the Y-axis direction, the Z-axis direction, the robot body 110 can drive the welding torch 200 at its distal end with four degrees of freedom, that is, by the approximate straight line movable mechanism 180, the X-axis movable mechanism 181, the Y-axis movable mechanism 182, and the Z-axis movable mechanism 183. However, the robot body 110 is not limited to this, and may be drivable with any number of degrees of freedom according to the application.

With the configuration as described above, the distal end of the welding wire 211 of the welding torch 200 mounted on the torch connector 130 can be oriented to any direction. For example, the robot body 110 can be driven on the guide rail 120 in the X-axis direction. The welding torch 200 can be driven in the Y-axis direction that is the width direction of the groove 10 or the Z-axis direction that is the depth direction of the groove 10. Also, the welding torch 200 can be tilted by the driving of the crank 170 depending on the working situation, such as the later-described leading angle or trailing angle.

For example, an attachment member 140 such as a magnet is provided below the guide rail 120 which is configured to be easily attached and detached to and from the work Wo by the attachment member 140. When the portable welding robot 100 is set to the work Wo, an operator can easily set the portable welding robot 100 on the work Wo by gripping both-side handles 160 of the portable welding robot 100.

### [Visual Sensor]

The visual sensor 700 is comprised of e.g., CCD (Charge Coupled Device) camera. The arrangement position of the visual sensor 700 is not particularly limited, and the visual sensor 700 may be directly mounted on the portable welding robot 100, or may be fixed to a particular location in the periphery as a monitoring camera. When the visual sensor 700 is directly mounted on the portable welding robot 100, the visual sensor 700 is moved to capture the periphery of the distal end of the welding torch 200 in coordination with the operation of the portable welding robot 100. The number of cameras included in the visual sensor 700 may be plural. For example, the visual sensor 700 may be formed using a plurality of cameras which are different in function and installation position.

In addition, the direction of image capturing by the visual sensor 700 is not particularly limited. For example, when the welding travel direction is forward, the visual sensor 700 may be disposed to capture an image on the forward side, or disposed to capture an image on the lateral surface side or the rear side. Therefore, the image capture range of the visual sensor 700 may be determined as appropriate. Note that in order to reduce the interference of the welding torch 200, it is preferable to capture an image from the forward side, and in this embodiment, an image is captured from the forward side. A captured image is transmitted to the data processing device 800, and utilized by the data processing device 800. At this point, the data processing device 800 may capture any image from the captured images e.g., at predetermined intervals, and may utilize the image for the later-described process. The capturing method and the capturing settings may be changed depending on, for example, the configuration and the function of the visual sensor 700, and the performance of the data processing device 800.

In this embodiment, the visual sensor 700 directly mounted on and fixed to the portable welding robot 100 is used. A video image is captured as the welding image so that an image capture range includes at least, the work W, the welding wire 211, and the arc as the objects (targets) included in the image data. Note that various image capture settings related to the welding image may be pre-defined, or may be changed depending on the operation conditions of the welding system 50. As the image capture settings, e.g., frame rate, the number of pixels of image, resolution, and shutter speed may be mentioned.

The components included in the welding system 50 are communicably connected by various wired/wireless communication methods. The communication methods herein are not limit to one type of method, and the components may be connected by a combination of a plurality of communication methods.

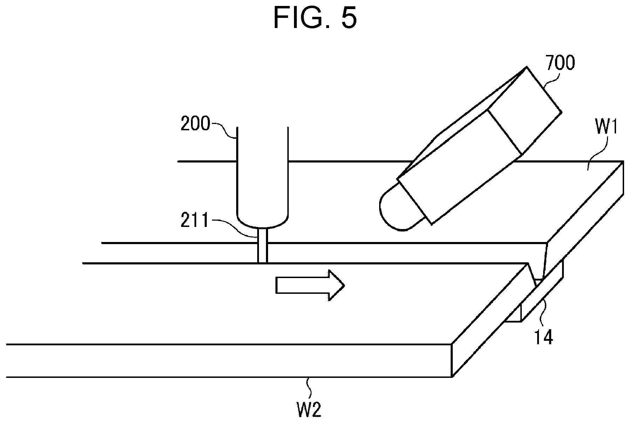

Fig. 5 is a perspective view illustrating the arrangement position of the visual sensor 700. Note that the welding torch 200 and the direction of the groove vary with the welding position, thus the direction illustrated in Fig. 5 is an example. In this embodiment, the work W is a butt joint. The work W consists of two metal plates, and are butted to each other with an interval of groove. In this embodiment an example of the horizontal position is taken, and in this case, let the work on the upper plate side be W1 (hereinafter referred to as the upper plate W1), and the work on the lower plate side be W2 (hereinafter referred to as the lower plate W2). Note that a backing member 14 made of ceramic is attached to the rear surface side of the two metal plates butted to each other. Note that a metal-based backing member may be used for the rear surface side, or no backing member may be used. Therefore, the material for the backing member is not particularly limited, and may vary depending on the material of the work W. In a butt joint, arc welding is performed in one direction along the groove. Hereinafter, the welding travel direction is referred to as the "welding direction". In Fig. 5, the welding travel direction is indicated by an arrow. Thus, the welding torch 200 is located rearward of the visual sensor 700.

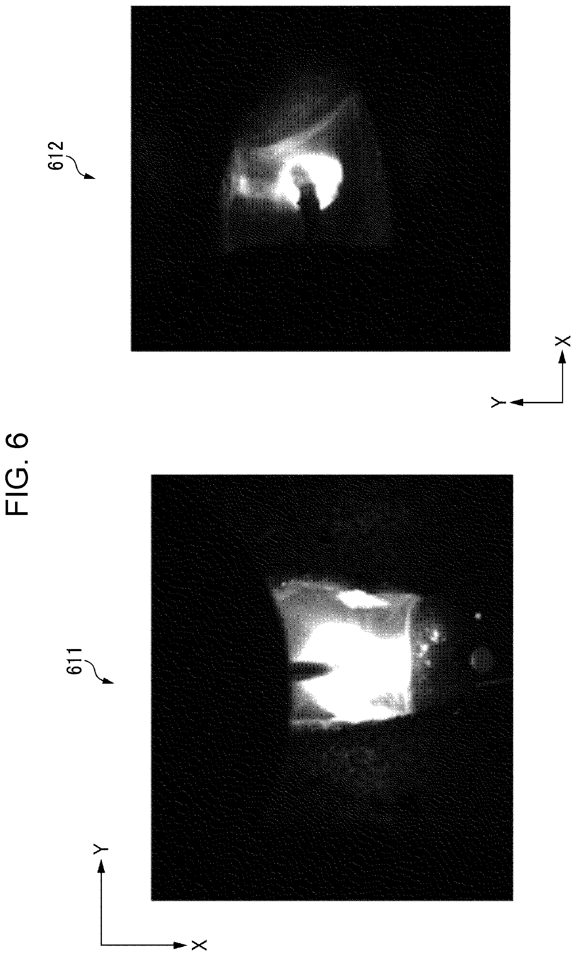

Fig. 6 is an example of image data captured and obtained by the visual sensor 700. Each image data of Fig. 6 has coordinates, and forms a coordinate plane consisting of 2 axes: the X-axis and the Y-axis. The X-axis indicates the welding direction, and the Y-axis indicates the direction perpendicular to the X-axis. As illustrated in Fig. 6, the image capture range of the visual sensor 700 includes the welding position of the work W, and an image of the welding position during arc welding is captured. The image includes a molten pool, the welding wire 211, and the arc. An image 611 illustrates an example of image data captured in the case of flat position welding. An image 612 illustrates an example of image data captured in the case of horizontal welding. The image 612 illustrates an example in which welding progresses from the left to the right of the image along the X-axis.

The visual sensor 700 in this embodiment can continuously capture a still image of 1024×768 pixels, for example. In other words, the visual sensor 700 can capture welding images as a video image. The resolution of a still image that can be captured by the visual sensor 700 is not particularly limited. For example, when the visual sensor 700 comprises a plurality of cameras, each of the plurality of cameras may obtain a welding image with a different resolution. Also, before a welding image is input to the later-described learned model, pre-processing may be performed such as clipping any feature region from the captured welding image for the purpose of reducing the processing time. Any feature region may be a fixed size range arranged so that a predetermined region is located at the center. The size of any feature region may be changed according to the welding situation.

### [Configuration of Data Processing Device]

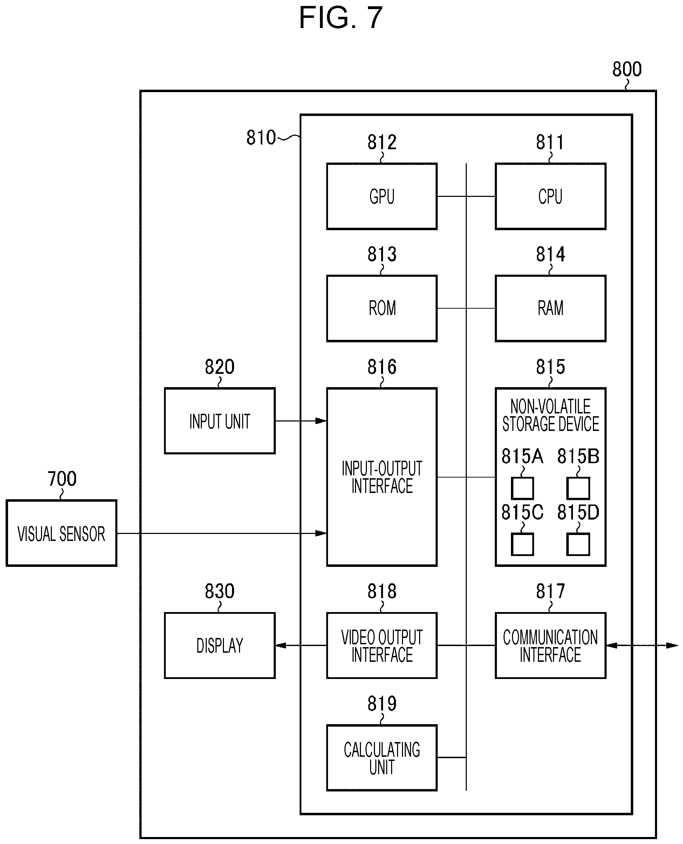

Fig. 7 is an explanatory diagram illustrating a configuration example of the data processing device 800. The data processing device 800 is comprised of a computer, for example. The computer includes a body 810, an input unit 820, and a display 830. The body 810 includes a CPU 811, a GPU (Graphical Processing Unit) 812, a ROM 813, a RAM 814, a non-volatile storage device 815, an input-output interface 816, a communication interface 817, a video output interface 818, and a calculating unit 819. The CPU 811, the GPU 812, the ROM 813, the RAM 814, the non-volatile storage device 815, the input-output interface 816, the communication interface 817, the video output interface 818, and the calculating unit 819 are communicably connected to each other via a bus or a signal line.

In the non-volatile storage device 815, a learning program 815A that performs deep learning using predetermined learning data, a learned model 815B generated through execution of the learning program 815A, information generation program 815C to generate welding information about welding using the learned model 815B, and an image data 815D are stored. In addition, an operating system and application programs are also installed in the non-volatile storage device 815.

The data processing device 800 implements various functions through execution of programs by the CPU 811 and the GPU 812. In this embodiment, the data processing device 800 implements a function of generating a learned model by machine learning, and a function of performing various processes at the time of actual welding by utilizing the learned model. The details of these functions will be described below. Note that the data processing device 800 may be divided according to the function of generating a learned model, and the function of performing control processes based on the information outputted from the learned model at the time of actual welding. From the viewpoint of versatility, the data processing device 800 is preferably divided into a plurality of devices according to its functions. The GPU 812 is used as an arithmetic device when the learning program 815A and the information generation program 815C are executed. The ROM 813 stores BIOS (Basic Input Output System) and the like to be executed by the CPU 811. The RAM 814 is used as a work area for a program read from the non-volatile storage device 815.

The input-output interface 816 is connected to the input unit 820 that includes a keyboard, a mouse and the like. The visual sensor 700 is also connected to the input-output interface 816. The image data output from the visual sensor 700 is provided to the CPU 811 via the input-output interface 816. The communication interface 817 is a communication module for wired or wireless communication. The video output interface 818 is connected to the display 830 comprised of e.g., a liquid crystal display or an organic EL (Electro-Luminescence) display, and a video signal corresponding to image data provided from the CPU 811 is output to the display 830. The calculating unit 819 cooperates with the CPU 811 and the GPU 812 to perform various processes according to this embodiment. The details of the processing of the calculating unit 819 will be described below.

### [Generation of Learning Model]

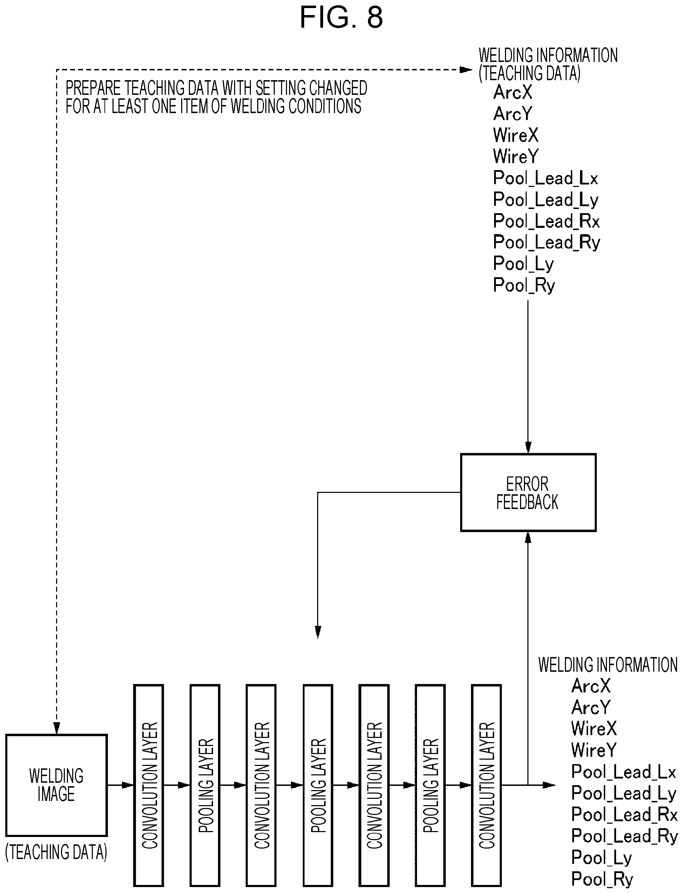

Hereinafter, the feature points extracted from image data and the learned model that extracts feature points in this embodiment will be described. Fig. 8 is a diagram for conceptually explaining the learned model 815B generation process by a learning process. The learned model 815B in this embodiment is formed by a convolution neural network, and includes a plurality of convolution layers and a plurality of pooling layers. Note that the configuration of the convolution neural network is not limited to what is described above, and the number of layers and the configuration may be different from what is described above.

The learned model 815B receives input of image data output from the visual sensor 700, and outputs feature points related to various pieces of welding information which appears in the image data. In this embodiment, as illustrated in Fig. 6, the image data input to the learned model 815B includes at least a molten pool, the welding wire, and the arc as the objects (targets), and feature points obtained from each object, or a plurality of objects are extracted. Then, welding information such as arc stability, the amount of weld deposition, arc tracking situation or a weld penetration degree can be obtained in real time based on the extracted feature points. Note that the image data may be referred to as the welding image below.

In this embodiment, as the feature points related to welding information, the distal end (wire distal end) of the welding wire 211, the center point (arc center) of the arc, the positions of distal ends on the right and left (or upper and lower) of a molten pool, and the positions of right and left (or upper and lower) ends of a molten pool. Input of the feature points to be used as the teacher data is made by an operator designating specific positions on the welding image in accordance with the instructions on the operation screen that supports a teaching work. Therefore, the teacher data is formed by pairs of a welding image and coordinate information indicating the feature points designated by an operator. In the learning process, the welding information output from the learning model is compared with the welding information included in the teacher data, and the error between those is fed back to adjust parameters. Learning progresses by repeating this process.

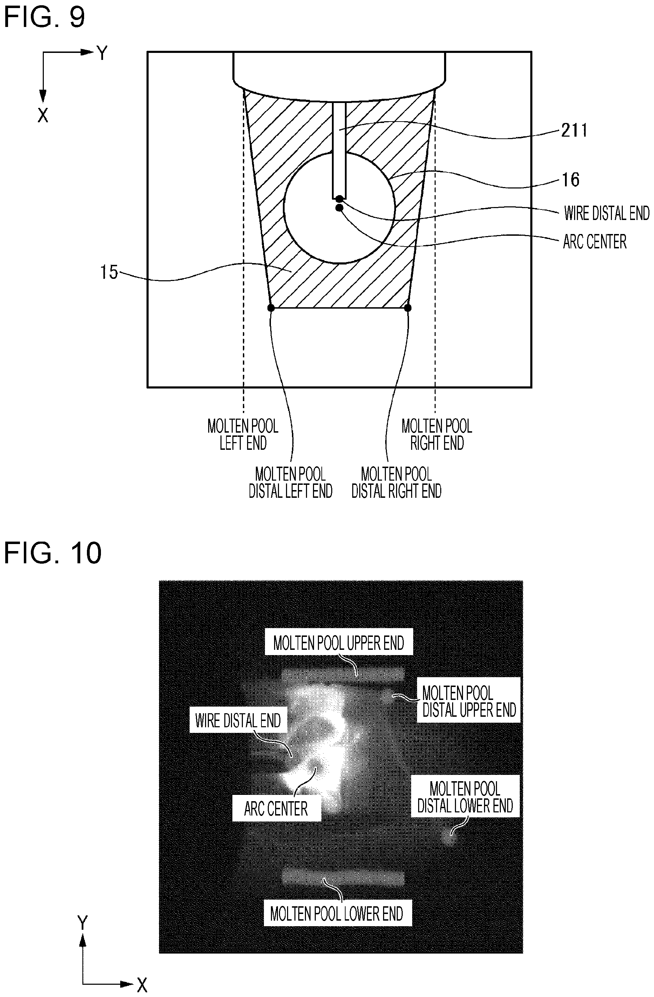

Fig. 9 is a view illustrating an example of a screen used for teaching work. The welding image illustrated in Fig. 9 includes a molten pool 15, a welding wire 211, and an arc 16. In Fig. 9, the molten pool 15 is shown by hatching. Note that the "right end" and the "left end" in Fig. 9 only indicate the right and left in the image, and may be replaced with the "upper end" and the "lower end" according to the welding position and the direction of the image.

Fig. 10 is an explanatory view illustrating a specific example of a welding image obtained by welding in the horizontal position, and an example of welding information in the welding image. Herein, in order to facilitate explanation, the position corresponding to the coordinates indicated by a feature point is drawn on the welding image. Note that as described above, the image has coordinates, and forms a coordinate plane consisting of 2 axes: the X-axis and the Y-axis.

In this embodiment, the visual sensor 700 is installed so that the weld line direction and the X-axis direction are parallel, thus in this embodiment, the X-axis direction may be referred to as the weld line direction. The Y-axis direction is a perpendicular direction to the X-axis, in other words, the groove width direction which is perpendicular to the weld line, thus the Y-axis direction may be referred to as the groove width direction. Note that the X-axis along which the portable robot in this embodiment moves is the weld line direction, thus the X-axis along which the portable robot moves and the X-axis on the welding image are the same direction, and for the Y-axis direction, it can be stated that the Y-axis along which the portable robot moves and the Y-axis on the welding image are the same direction.

In this embodiment, as the feature points, the coordinate position (ArcX, ArcY) of the arc center, the coordinate position (WireX, WireY) of the wire distal end, the coordinate position (Pool_Lead_Lx, Pool_Lead_Ly) of the molten pool distal lower end, the coordinate position (Pool_Lead_Rx, Pool_Lead_Ry) of the molten pool distal upper end, the coordinate position (Pool_Ly) of the molten pool lower edge, and the coordinate position (Pool_Ry) of the molten pool upper edge are taught by an operator. Input of a feature point is made by an operator designating a specific position on the screen. The coordinates which provide the boundary between the welding wire 211 and the arc are an example of position coordinates of the wire distal end. The molten pool distal lower end, the molten pool distal upper end, the molten pool lower edge, and the molten pool upper edge are an example of a feature point related to the behavior of the molten pool 15. For example, when the feature points of the molten pool lower edge and the molten pool upper edge are known, the width of the molten pool 15 can be calculated.

### [Geometry Quantity Data]

In this embodiment, at least three quantities in the following are calculated: the difference (hereinafter, referred to as the "LeadX") between either predetermined molten pool distal end position and the position of the wire distal end in the X-direction, the difference (hereinafter, referred to as the "LeadW") between the molten pool distal upper end and the molten pool distal lower end, and the angle (hereinafter, referred to as the "distal end inclination angle") formed by the line connecting the molten pool distal upper end and the molten pool distal lower end, and the X-axis direction of the welding image. In this embodiment, the numerical data calculated based on feature points in this manner is also referred to as geometry quantity data.

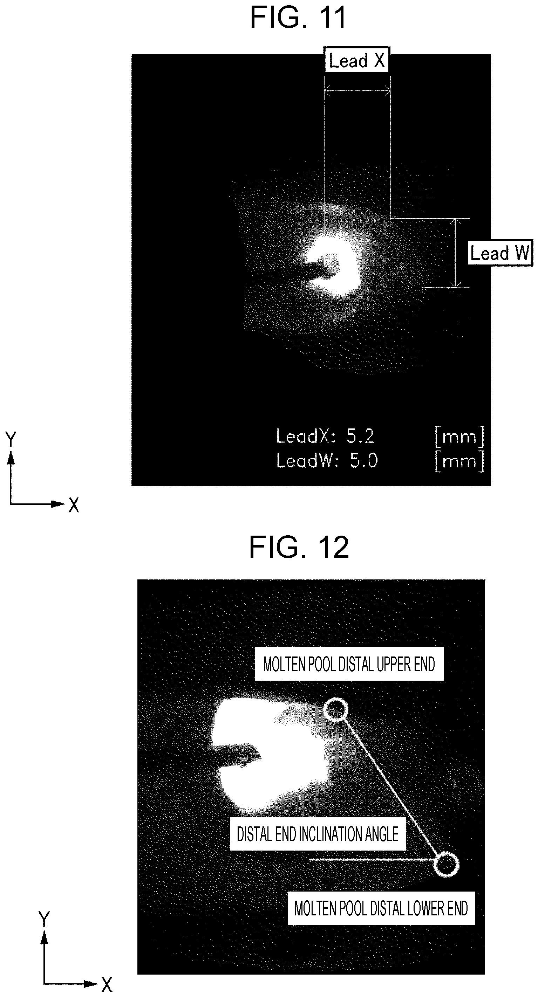

The geometry quantity data is calculated, sampled at predetermined intervals, and the later-described automatic welding control is performed based on the sampling data. Note that the sampling data is also referred to as time-series data below. The number of samplings per unit time may be the same as the number of frames (fps: flames per second) of an image, and may be decimated as needed. A specific description is given based on the welding images of Fig. 11 and Fig. 12. Of the feature points output from a learned model, the coordinate position (Pool_Lead_Lx, Pool_Lead_Ly) of the molten pool distal lower end, the coordinate position (Pool_Lead_Rx, Pool_Lead_Ry) of the molten pool distal upper end, and the coordinate position (WireX, WireY) of the wire distal end are used. In this embodiment, as described below, the calculation of LeadX is based on the coordinate position of the molten pool distal upper end and the coordinate position of the wire distal end; however, the molten pool distal end position is not limited to the upper side, and the coordinate position of the molten pool distal lower end may be used according to the purpose. In this embodiment, the calculating unit 819 calculates the difference ("Pool_Lead_Rx" - "WireX") between the coordinate position of the molten pool distal upper end and the coordinate position of the wire distal end in the X-axis direction. In addition, "LeadW" is calculated as the difference ("Pool_Lead_Ry" - "Pool_Lead_Ly") between the coordinate position of the molten pool upper edge and the coordinate position of the molten pool lower edge in the Y-axis direction. In this case, the distance to be calculated may be the number of pixels, or may be converted to any unit such as "mm" and "cm". The example of Fig. 11 shows an instance in which LeadX is detected as 5.2 [mm], and LeadW is detected as 5.0 [mm].

Taking time-series data of LeadX and LeadW as the geometric quantity data makes it possible to determine the degree of normality of welding, and as described below, when the welding is determined to be unsteady, automatic control is performed so that the welding speed is corrected, and a steady state is resumed. Note that the time-series data of the LeadX and LeadW as the geometric quantity data may be displayed on a monitor, and monitoring may be performed.

Also, the "distal end inclination angle" as geometric quantity data is calculated based on the two points, the coordinate position of the molten pool distal lower end and the coordinate position of the molten pool distal upper end, and on the coordinate positions (Pool_Lead_Rx (upper plate side X), Pool_Lead_Ly (lower plate side Y)). Note that the method of calculating the angle is not particularly limited, but the angle may be calculated using trigonometric functions, for example. Although the details will be described later, the time-series data of the "distal end inclination angle" makes it possible to determine the effect of disturbance, and automatic control is performed to reduce the effect of disturbance. Specifically, in this embodiment, at least, automatic control to stabilize the welding and automatic control to reduce the effect of disturbance are performed.

In the geometry quantities calculated in this embodiment including the "distal end inclination angle" in the illustration, when weaving is applied to the welding, variation of each object increases, and the calculation value of each geometry quantity may vary. Thus, in this embodiment, when weaving is applied, in order to reduce the adverse effect of the weaving, it is preferable that measurement be made with a predetermined number of samplings in the range of movement from a predetermined weaving end point to the other weaving end point. In other words, the sampling timing for the image data and the number of samplings to calculate the geometry quantities may be determined in consideration of the cycle of the weaving. Note that of the objects, particularly, the molten pool receives significant effect of the weaving, and it may be said that when the "distal end inclination angle" is used as a geometry quantity as in this embodiment, the molten pool is particularly useful. When the horizontal position is used as in this embodiment, it is more preferable that measurement be made with a predetermined number of samplings in the range of movement from the weaving end point on the lower plate side to the weaving end point on the upper plate side. In other words, it is better not to utilize the image data at the time of movement from the weaving end point on the upper plate side to the weaving end point on the lower plate side.

Note that in this embodiment, in addition to the geometry quantity data of the distal end inclination angle, the geometry quantity data, LeadX, LeadW are calculated as an example, but without being limited to this, for example, one of the following may be treated as the geometry quantity data: (1) the coordinate positions of a single or a plurality of feature points, (2) the distance between any plurality of feature points, or (3) the area formed by any plurality of feature points which are obtained from a single object. Alternatively, sampling of (4) the distance between feature points corresponding to objects, obtained from different objects may be treated as the geometry quantity data.

The case of (1) the coordinate positions of a single or a plurality of feature points will be described more specifically. When the single object is an arc, the stability of the arc can be determined by calculating the geometric quantity data, ArcX and ArcY which are the coordinate positions of the arc center. (2) the distance between any plurality of feature points include the above-mentioned LeadW obtained from the object as the molten pool. In the case of (3) the area formed by any plurality of feature points, for example, the area of the molten pool can be used, and the amount of deposition can be evaluated. (4) the distance between feature points of objects includes time-series data of the above-mentioned LeadX obtained from different objects, that is, the welding wire and the molten pool, the difference between the wire distal end position and the molten pool center position, and the distance between the groove and the molten pool distal end. The time-series data composed of the geometric quantity data consisting of the distance between the wire distal end position and the molten pool center position is applicable to weld line profile. The geometric quantity data consisting of the distance between the groove and the molten pool distal end is applicable to determination of weld penetration.

### [Misalignment]

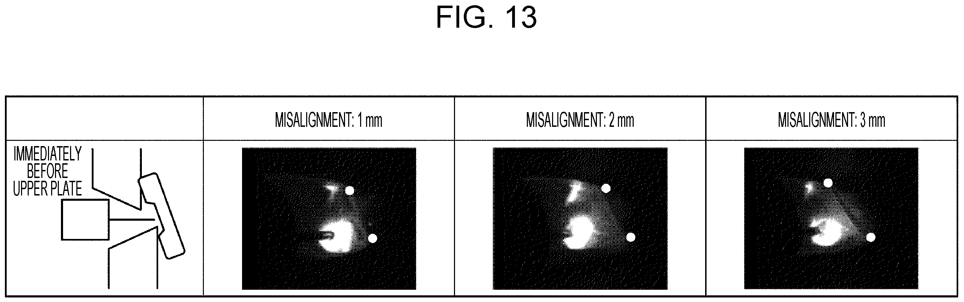

Here, the misalignment according to this embodiment and its effect on the feature points will be described. Fig. 13 is an exemplary view illustrating the misalignment in horizontal welding. Fig. 13 illustrates an example in which misalignment occurs because the upper plate is located closer to the welding torch 200 than the lower plate. Examples of an image are shown when the misalignment is 1 mm, 2 mm, 3 mm. As illustrated in Fig. 13, the positions of the molten pool distal upper end and the molten pool distal lower end vary. For example, when the misalignment is 1 mm, the distal end inclination angle up to 63° is obtained. When the misalignment is 2 mm, the distal end inclination angle up to 53° is obtained. When the misalignment is 3 mm, the distal end inclination angle up to 50° is obtained.

Note that misalignment may occur when the lower plate is located closer to the welding torch 200 than the upper plate. Also, misalignment which is likely to occur varies depending on the weld position. Thus, without being limited to the example illustrated in Fig. 13, considerations may be taken to cope with various misalignments.

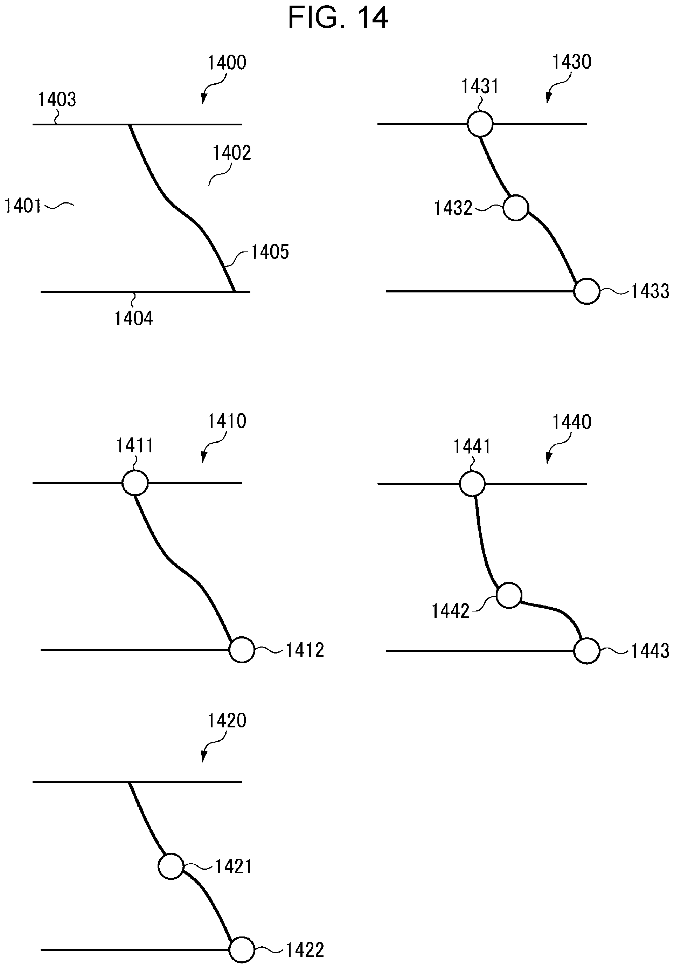

Fig. 14 is an exemplary view illustrating an example of feature points used to derive the distal end inclination angle according to this embodiment. Fig. 14 illustrates, for example, the image as shown in Fig. 10 in a simplified manner. An image 1400 shows a molten pool 1401, an unmolten portion 1402, a molten pool upper edge 1403, a molten pool lower edge 1404, and a molten pool boundary 1405. The molten pool boundary 1405 shows the boundary on the side in the welding travel direction. The molten pool upper edge 1403 and the molten pool lower edge 1404 may correspond to the groove surface of the work W. The image 1410 shows an example in which in order to derive the distal end inclination angle, the molten pool distal upper end on the molten pool upper edge 1403, and the molten pool distal lower end on the molten pool lower edge 1404 are used as feature points 1411, 1412, respectively.

The positions of feature points are not limited to those described above, and for example, as shown in the image 1420, a feature point 1421 on the molten pool boundary 1405 may be used instead of the feature point 1411 at the molten pool distal end on the molten pool upper edge 1403. Alternatively, the most forward position among the feature points on the boundary in the welding travel direction may be used as a feature point.

The feature points used to derive the distal end inclination angle are not limited to two points, and three or more points may be used. For example, as shown in an image 1430, a feature point 1432 on the molten pool boundary 1405 may be used in addition to a feature point 1431 at the molten pool distal end on the molten pool upper edge 1403, and a feature point 1433 at the molten pool distal lower end on the molten pool lower edge 1404. Particularly, when the molten pool boundary 1405 has an extreme shape as shown in an image 1440, three or more feature points may be used, for example, a feature point 1441 at the molten pool distal upper end on the molten pool upper edge 1403, a feature point 1443 at the molten pool distal lower end on the molten pool lower edge 1404, and a feature point 1442 on the molten pool boundary 1405.

Each feature point may be identified based on the output of the learned model 815B mentioned above. Thus, the process applied by the calculating unit 819 to the output of the learned model 815B may be changed depending on the feature points to be treated.

### [Disturbance Determination method and Processing Method at Time of Disturbance Determination]

The disturbances in welding include, for example, misalignment of a work, decrease in gas flow rate, magnetic arc blow, instability of wire feeding, instability of current supply, oil adhesion to a work, and rust of a work. These factors all have an effect on the behavior of a molten pool, and the inventors have found that the effect of disturbance can be determined by geometry quantities obtained through calculation based on a plurality of feature points extracted from the boundary position between a molten pool and an unmolten portion forward in at least welding direction. The welding conditions are corrected based on the result of the determination of disturbance, thereby implementing automatic control resistant to disturbance. Hereinafter, the disturbance determination method according to this embodiment will be described in detail.

In this embodiment, as described above, as the feature points at the boundary position between the forward molten pool and unmolten portion, the coordinate position (Pool_Lead_Lx, Pool_Lead_Ly) of the molten pool distal lower end, and the coordinate position (Pool_Lead_Rx, Pool_Lead_Ry) of the molten pool distal upper end are extracted. As described above using Fig. 14, the number of feature points at the boundary position between the molten pool and unmolten portion may not be two, and the positions to be extracted are not limited to the distal upper end and the distal lower end. For example, the boundary coordinate positions between the molten pool and unmolten portion at the central position along the molten pool width may be extracted. Note that information about the boundary coordinate positions between the molten pool and unmolten portion can be obtained in the greatest detail, thus it is preferable to extract at least the coordinate position (Pool_Lead_Lx, Pool_Lead_Ly) of the molten pool distal lower end, and the coordinate position (Pool_Lead_Rx, Pool_Lead_Ry) of the molten pool distal upper end as in this embodiment.

The geometry quantities include, e.g., angle, curvature, distance, and area which are calculated based on the extracted feature points, and it is preferable to calculate at least one of these geometry quantities. As described above, in this embodiment, the angle formed by the line connecting the molten pool distal lower end and the molten pool distal upper end, and the X-axis direction of the welding image is referred to as the "distal end inclination angle", and calculated. The "distal end inclination angle" can accurately determine the "misalignment of the work" which is likely to occur, particularly as a disturbance, thus as the geometry quantity to be calculated, it is the most preferable to select at least the "distal end inclination angle".

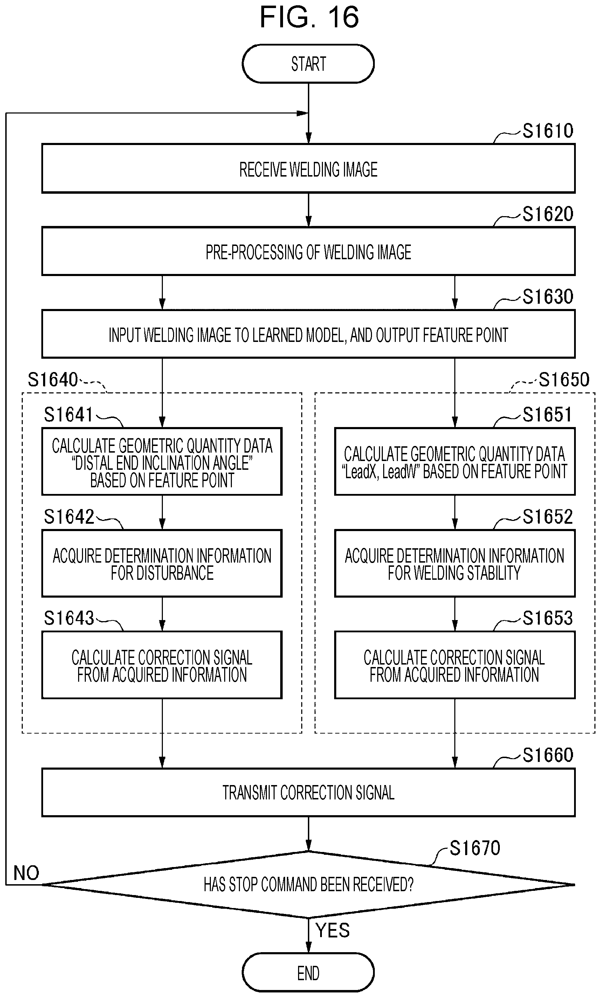

The process including the disturbance determination method according to this embodiment will be described using Fig. 16. Fig. 16 shows a flowchart in which feature points are extracted from a welding image by the learned model 815B, and correction signals to perform automatic control are output on the basis of the time-series data of the geometry quantity data calculated based on the feature points. In this embodiment, a disturbance determination process (S1640), and a welding stability determination process (S1650) are performed concurrently, and control is performed based on the result of each process. First, the disturbance determination method and the processing method (S1640) will be described, and the welding stability determination method and the processing method (S1650) will be described later.

The processes below are implemented by the processing units of the data processing device 800 reading and executing various programs stored in the non-volatile storage device 815. The process flow starts at the same time as the start of welding, and along with this, the image capturing by the visual sensor 700 also starts.

### (Disturbance Determination Process)

In S1610, while automatic welding is performed, the data processing device 800 receives, from the visual sensor 700, a welding image which has captured a welding position.

In S1620, the data processing device 800 performs image processing as pre-processing for the welding image received in S1610. The image processing includes, for example, image reduction, and conversion to a grayscale image. Note that another process may be further performed, or part of the process may be omitted depending on the process load or the like.

In S1630, the data processing device 800 inputs the welding image pre-processed in S1620 to the above-mentioned learned model 815B, and acquires feature points as the welding information outputted as the result of the input. In this embodiment, as illustrated in Fig. 8, the coordinate position (ArcX, ArcY) of the arc center, the coordinate position (WireX, WireY) of the wire distal end, the coordinate position (Pool_Lead_Lx, Pool_Lead_Ly) of the molten pool distal lower end, the coordinate position (Pool_Lead_Rx, Pool_Lead_Ry) of the molten pool distal upper end, the coordinate position (Pool_Ly) of the molten pool lower edge, and the coordinate position (Pool_Ry) of the molten pool upper edge may be output.

In S1640, the data processing device 800 performs the disturbance determination process. The disturbance determination process consists of steps in S1641 to S1643.

In S1641, the calculating unit 819 of the data processing device 800 calculates geometric quantity data based on the feature points output by the learned model. In this embodiment, the geometry quantity data of the "distal end inclination angle" is used, which is the angle calculated from the two points, that is, the coordinate position of the molten pool distal lower end and the coordinate position of the molten pool distal upper end, and the coordinate positions (Pool_Lead_Rx (upper plate side X), Pool_Lead_Ly (lower plate side Y)).

In S1642, the calculating unit 819 acquires determination information for disturbance based on the geometry quantity data of the "distal end inclination angle". In this embodiment, a threshold value is pre-set according to a gap, and determination information for disturbance is output using the threshold value as a reference. Note that the threshold value is not limited to the gap, and may be set as a fixed value. A configuration may be adopted in which, for example, a database is prepared, and is referenced for the threshold value. In the horizontal position in this embodiment, when the geometry quantity falls below a predetermined threshold value, disturbance is determined. Note that the gap corresponds to the width of the groove, and is referred to as a root gap or a root interval.

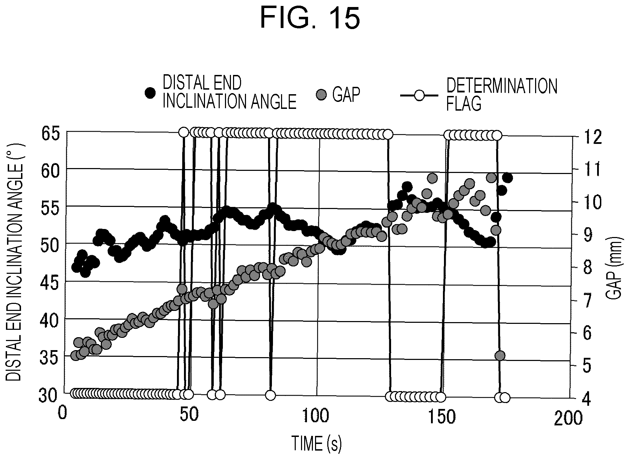

Fig. 15 is a graph illustrating a result of determination when disturbance is determined based on the distal end inclination angle. In Fig. 15, the horizontal axis indicates time [s], the left vertical axis indicates distal end inclination angle [°], and the right vertical axis indicates gap [mm] . Here, an example is shown in which the threshold value is changed according to the gap. The determination flag shows a binary value, ON or OFF, and in Fig. 15, the upper side of the graph indicates ON, and the lower side thereof indicates OFF. When the determination flag is ON, it is a state where a disturbance is determined to have occurred, and when the determination flag is OFF, it is a state where no disturbance is determined to have occurred.

A description is given using Fig. 15. In this embodiment, when the gap is less than 7 mm, no threshold value is provided. Meanwhile, when the gap is greater than or equal to than 7 mm, the threshold value is set to 55°. Therefore, when the gap is greater than or equal to than 7 mm, and the distal end inclination angle falls below 55°, a disturbance is determined to have occurred. Note that the determination information for disturbance is not limited to the qualitative evaluation as in this embodiment, and may be quantitative evaluation. For example, the difference between a calculated angle and a threshold angle is determined, and the intensity of disturbance may be evaluated quantitatively.

In S1643, the calculating unit 819 calculates a correction signal based on the determination information for disturbance. In this embodiment, a stop time (hereinafter also referred to as an upper plate end stop time) at the end point on the upper plate W1 side during weaving is corrected. The condition to be corrected may be determined as appropriate according to the welding working situation, and is not particularly limited. For example, the condition to be corrected includes weld current, arc voltage or condition related to weaving. At least one of these conditions may be selected as the condition to be corrected; however, from the viewpoint of easiness of control, it is preferable to select the condition related to weaving. In addition, the condition related to weaving has various items including e.g., weaving width, weaving frequency, end stop time, speed between both ends, and weaving trajectory. At least one of these may be selected. Note that when the weld position is horizontal position, as in this embodiment, it is preferable that the item of end stop time be selected, and it is further preferable that the upper plate end stop time be selected as the amount of correction.

In S1660, the data processing device 800 outputs, to the robot control device 600, the correction signal calculated based on the determination information for disturbance.

In S1670, the data processing device 800 determines whether a stop command has been received from the robot control device 600. The stop command here corresponds to a welding stop command transmitted from the robot control device 600. When a stop command has not been received (NO in S1670), the process of the data processing device 800 returns to S1610. Meanwhile, when a stop command has been received (YES in S1670), the process flow is completed.

### (Welding Stability Determination Process)

Next, the welding stability determination method and the processing method (S1650) will be described using Fig. 16. In the following description, it is assumed that the processes in S1610 to S1630, S1660 and S1670 have the same content as the disturbance determination process, but may have different content. The result of process in each step may be utilized in common.

In S1610, while automatic welding is performed, the data processing device 800 receives, from the visual sensor 700, a welding image which has captured a welding position.

In S1620, the data processing device 800 performs image processing as pre-processing for the welding image received in S1610. The image processing includes, for example, image reduction, and conversion to a grayscale image. Note that another process may be further performed, or part of the process may be omitted depending on the process load or the like.

In S1630, the data processing device 800 inputs the welding image pre-processed in S1620 to the above-mentioned learned model 815B, and acquires feature points outputted as the result of the input. In this embodiment, as illustrated in Fig. 8, the coordinate position (ArcX, ArcY) of the arc center, the coordinate position (WireX, WireY) of the wire distal end, the coordinate position (Pool_Lead_Lx, Pool_Lead_Ly) of the molten pool distal lower end, the coordinate position (Pool_Lead_Rx, Pool_Lead_Ry) of the molten pool distal upper end, the coordinate position (Pool_Ly) of the molten pool lower edge, and the coordinate position (Pool_Ry) of the molten pool upper edge may be output.

In S1650, the data processing device 800 performs a welding stability determination process. The welding stability determination process is comprised of the steps in S1651 to S1653.

In S1651, the calculating unit 819 of the data processing device 800 calculates geometric quantity data based on the feature points output by the learned model 815B. In this embodiment, the geometry quantity data of "LeadX" and the geometry quantity data of "LeadW" are used, the "LeadX" being calculated as the difference ("Pool_Lead_Rx" - "WireX") between the coordinate position of the molten pool distal upper end and the coordinate position of the wire distal end in the X-axis direction, the "LeadW" being calculated as the difference ("Pool_Lead_Ry" - "Pool_Lead_Ly") between the coordinate position of the molten pool distal lower end and the coordinate position of the molten pool distal right end in the Y-axis direction.

In S1652, the calculating unit 819 acquires determination information for welding stability along time series based on the geometry quantity data of "LeadX" or "LeadW". Note that the determination information for welding stability is not limited to the qualitative evaluation as in this embodiment, and may be quantitative evaluation.

In S1653, the calculating unit 819 calculates a correction signal based on the determination information for welding stability. In this embodiment, it is preferable to calculate a correction signal for the welding speed. Note that a correction signal for the same item as that of the disturbance determination process may be calculated.

In S1660, the data processing device 800 outputs, to the robot control device 600, the correction signal calculated based on the determination information for welding stability.

In S1670, the data processing device 800 determines whether a stop command has been received from the robot control device 600. The stop command here corresponds to a welding stop command transmitted from the robot control device 600. When a stop command has not been received (NO in S1670), the process of the data processing device 800 returns to S1610. Meanwhile, when a stop command has been received (YES in S1670), the process flow is completed.

In the example described above, a correction signal based on the result of the processes of the disturbance determination process (S1640) and the welding stability determination process (S1650) are each transmitted. However, without being limited to this, a correction signal based on the result of one of the processes may be transmitted preferentially. Also, only the result of either process may be transmitted according to the timing of determination.

### [Welding Control Method]

Hereinafter, the welding operation of the welding system 50 at the time of actual welding will be described. When arc welding is performed, an operator starts each of the robot control device 600, the welding power supply 400, and the data processing device 800. The robot control device 600 controls the movement of the portable welding robot 100 that performs welding. The data processing device 800 inputs a welding image captured by the visual sensor 700, and successively outputs a feature point related to the arc welding. In this embodiment, the feature points are the position of the wire distal end, the arc center, the molten pool distal upper end lower end positions, and the molten pool upper edge and lower edge positions.

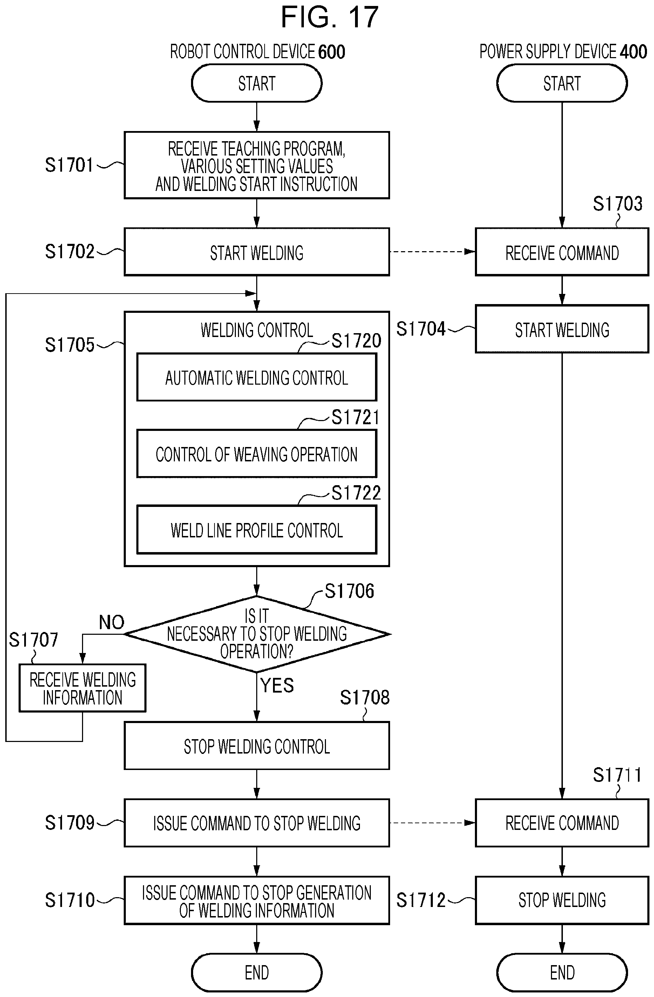

Fig. 17 is a flowchart illustrating the processing operation of the robot control device 600 and the welding power supply 400. When starting arc welding, an operator operates a teach pendant (not illustrated) connected to the robot control device 600 to input the teaching program, and various set values to be applied to the robot control device 600. The teaching program here is defined as the trained program that has been trained for the movement of the portable welding robot 100 and instructions for welding start, welding end. In this embodiment, the process sequence of Fig. 17 and the process flow of Fig. 16 are performed concurrently.

In S1701, the robot control device 600 receives the teaching program, and various set value instructions.

In S1702, after the start of the teaching program, the robot control device 600 moves the portable welding robot 100 to a predetermined welding start position, and commands the welding power supply 400 to start welding (arc on). Note that before the start of a welding program, sensing such as touch sensing and laser sensing may be performed to correct the set values of the teaching program.

In S1703, the welding power supply 400 receives a command to start welding from the robot control device 600.

In S1704, the welding power supply 400 starts welding by controlling a built-in power supply circuit (not illustrated) to provide electric power. Thus, a voltage is applied across the welding wire 211 (see Fig. 1) and the work W (see Fig. 1) to generate an arc at the welding start position.

In S1705, the robot control device 600 transmits a control signal to the welding power supply 400 or the portable welding robot 100 to perform welding control. The welding control includes, for example, automatic welding control (S1720), control of the weaving operation (S1721), and weld line profile control (S1722). In the automatic welding control, the data processing device 800 transmits a correction signal to control at least one of welding speed, weld current or arc voltage to the portable welding robot 100 or the welding power supply 400, while automatically moving the welding torch 200 in the welding direction, and the portable welding robot 100 or the welding power supply 400 performs welding in accordance with the correction signal. Note that from the view point of easiness of the control, when the stability of welding is to be acquired, the automatic welding control preferably includes control of the welding speed, and in this embodiment, only the control of the welding speed is performed. When the effect on a molten pool by disturbance is to be reduced, control of the weaving operation preferably includes control of the end stop time. In this embodiment, only the control of the end stop time is performed.

In S1706, the robot control device 600 determines whether it is necessary to stop welding. For example, the robot control device 600 receives instructions to stop welding from an operator, and when a welding end position is detected or a welding abnormality is detected by the teaching program, may determine that it is necessary to stop welding. When it is unnecessary to stop welding (NO in S1706), the process of the robot control device 600 proceeds to S1707. Meanwhile, when it is necessary to stop welding (YES in S1706), the process of the robot control device 600 proceeds to S1708.

In S1707, the robot control device 600 receives welding information from the data processing device 800. The welding information received here is the correction signal calculated based on the time-series data on the basis of feature points which have been output by the data processing device 800 using the learned model 815B. The details of generation of the welding information received in this step is as described in the above-mentioned Fig. 16. Subsequently, the process returns to S1705, and the robot control device 600 repeats the process using the received welding information.

In S1708, the robot control device 600 stops the welding control.

In S1709, the robot control device 600 commands the welding power supply 400 to stop welding. The stop of welding is implemented by stopping the supply of the welding power.

In S1710, the robot control device 600 commands the data processing device 800 to stop generation of the welding information.

In S1711, the welding power supply 400 receives a command to stop welding from the robot control device 600.

In S1712, the welding power supply 400 controls the power supply circuit by a CPU (not illustrated) to stop the welding. Consequently, the operation of the robot control device 600 and the welding power supply 400 is completed.

As described so far, in this embodiment, welding quality can be ensured, and automatic welding with good welding work efficiency can be achieved even in a welding situation where disturbance occurs.

### <Second Embodiment>

In the above-described embodiment, an aspect has been described in which disturbance is determined using the distal end inclination angle identified by feature points. Here, depending on a disturbance, a situation is assumed in which a feature point is unrecognizable or misrecognized from image data. Thus, in this embodiment, the situation as mentioned above is assumed, and an aspect will be described in which in addition to the configuration of the first embodiment, it is determined whether an abnormality has occurred in the image data, and control is performed based on a result of the determination. A description for the components common with the first embodiment is omitted, and the difference is focused and will be described.

### [Abnormality Caused by Disturbance]

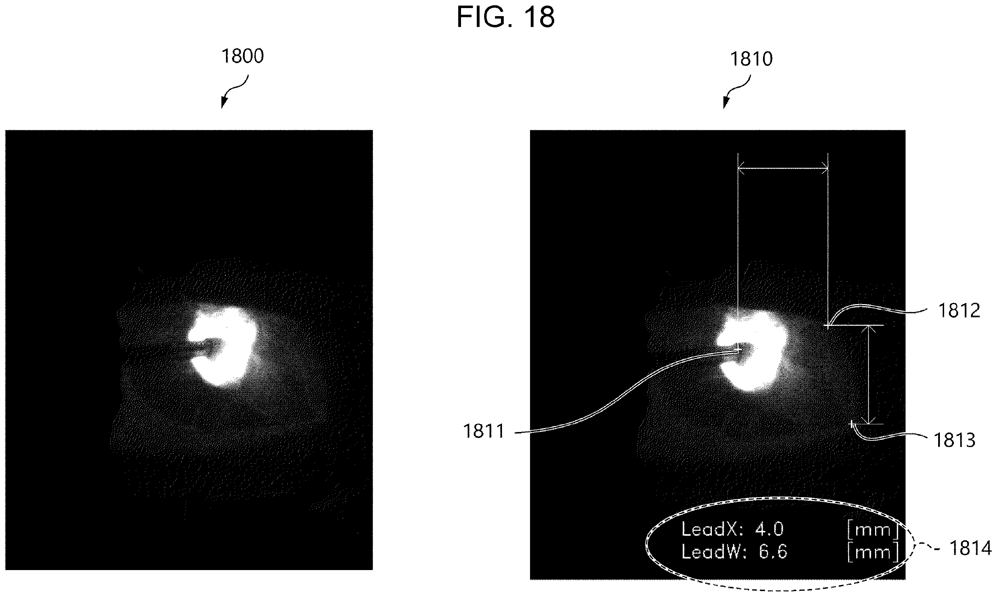

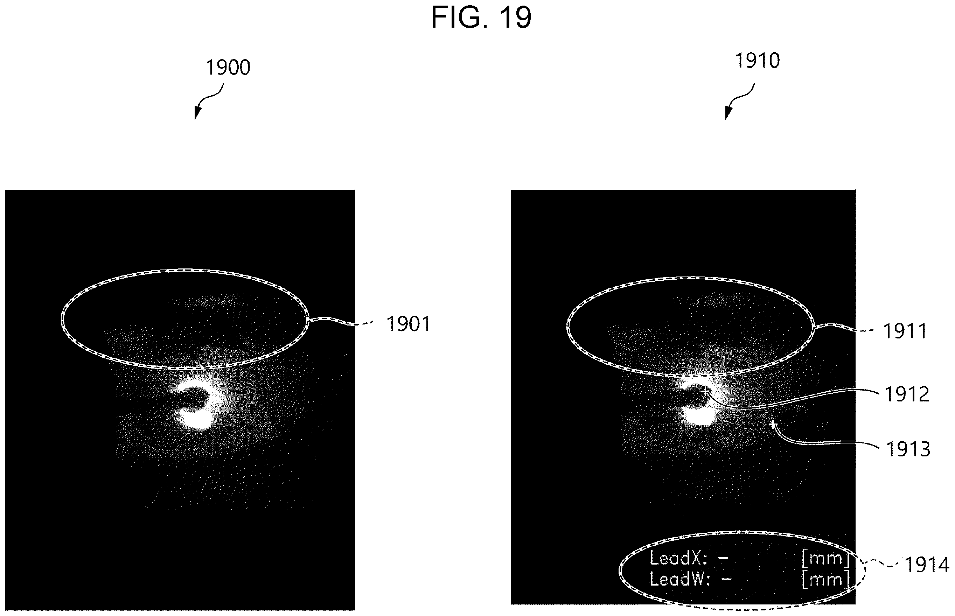

First, the abnormality in the welding image caused by disturbance according to this embodiment will be described using Fig. 18 and Fig. 19. Fig. 18 and Fig. 19 are exemplary views illustrating an analysis result of the welding image according to this embodiment. Fig. 18 illustrates an example in which there is no abnormality, and Fig. 19 illustrates an example in which there is an abnormality. In Fig. 18, an image 1800 indicates the image in the periphery of a molten pool. An image 1810 indicates a result of calculation process for geometric quantity data. As a result of performing the above-mentioned process in the image 1810, a feature point 1811 representing the distal end of the welding torch 200, a feature point 1812 representing the distal upper end of the molten pool, and a feature point 1813 representing the distal lower end of the molten pool are identified. The LeadX and LeadW are derived based on these feature points. A parameter 1814 indicates the values of calculated LeadX and LeadW, and here, LeadX = 4.0 [mm], LeadW = 6.6 [mm] are calculated.

In Fig. 19, an image 1900 indicates the image of the periphery of the molten pool. Herein, the image 1900 includes an object 1901 corresponding to an oxide film (corresponding to rust of the work). An image 1910 indicates a result of calculation process for geometric quantity data. As a result of performing the above-mentioned process in the image 1910, a feature point 1912 representing the distal end of the welding torch 200, and a feature point 1913 representing the distal lower end of the molten pool are identified. However, due to an object 1911 corresponding to an oxide film, a feature point corresponding to the distal upper end of the molten pool has not been detected. Therefore, the LeadX and the LeadW have not been derived. Thus, a parameter 1914 does not display the values of LeadX and LeadW. In such a case, it is treated that some abnormality has occurred.

### [Abnormality Determination Method and Processing Method at Time of Abnormality]

Disturbance factors include misalignment of the work, decrease in gas flow rate, magnetic arc blow, instability of wire feeding, instability of current supply, oil adhesion to the work, an oxide film, and sputter adhesion to the work. For example, due to an oxide film of the work, and sputter adhesion, as illustrated in Fig. 19, an object or part of an object is hidden, and a situation where a feature point cannot be recognized, or a situation where a feature point changes suddenly occurs. Therefore, the geometric quantity data calculated based on the feature points under such a situation may be defective. When such data is used, as a result, the entire automatic control may be adversely affected.

In this embodiment, geometric quantity data is calculated, abnormality determination is made based on the time-series data composed of the geometric quantity data, and a portion corresponding an abnormality in the time-series data is identified. The welding conditions are then corrected based on the time-series data excluding the portion determined to have an abnormality, thereby implementing automatic control resistant to disturbance. Hereinafter, an abnormality determination method according to this embodiment will be described in detail.

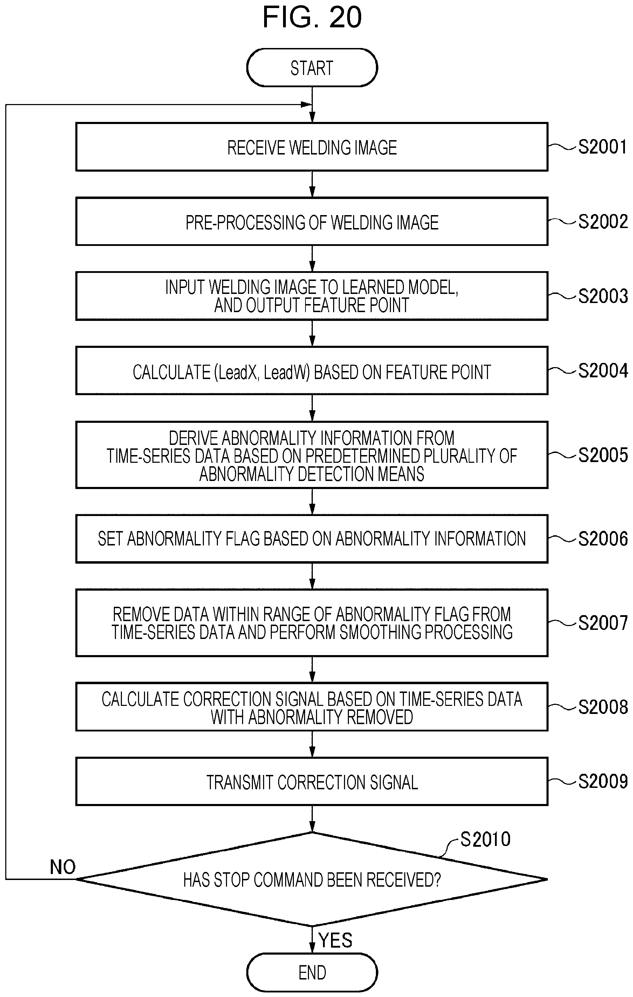

The abnormality determination method will be described using Fig. 20. Fig. 20 is a flowchart in which feature points are extracted from a welding image by the learned model 815B, an abnormality determination is made, and a correction signal to perform automatic control is output in consideration of abnormality details. The process flow may be performed concurrently with the process flow of Fig. 16 shown in the first embodiment, or performed as part of the disturbance determination process (S1640). The common processes due to the structure of the flow may be performed in common.

The process below is implemented by the processing units of the data processing device 800 reading and executing various programs stored in the non-volatile storage device 815. The process flow starts at the same time as the start of welding, and along with this, the image capturing by the visual sensor 700 also starts.

In S2001, while automatic welding is performed, the data processing device 800 receives, from the visual sensor 700, a welding image which has captured a welding position.

In S2002, the data processing device 800 performs image processing as pre-processing for the welding image received in S2001. The image processing includes, for example, image reduction, and conversion to a grayscale image. Note that another process may be further performed, or part of the process may be omitted depending on the process load or the like.

In S2003, the data processing device 800 inputs the welding image pre-processed in S2002 to the above-mentioned learned model 815B, and acquires feature points as the welding information outputted as the result of the input. In this embodiment, the coordinate position (ArcX, ArcY) of the arc center, the coordinate position (WireX, WireY) of the wire distal end, the coordinate position (Pool_Lead_Lx, Pool_Lead_Ly) of the molten pool distal lower end, the coordinate position (Pool_Lead_Rx, Pool_Lead_Ry) of the molten pool distal upper end, the coordinate position (Pool_Ly) of the molten pool lower edge, and the coordinate position (Pool_Ry) of the molten pool upper edge may be output.

In S2004, the data processing device 800 calculates geometric quantity data based on the feature points output by the learned model 815B. In this embodiment, "LeadX" and "LeadW" are used, the "LeadX" being calculated as the difference ("Pool_Lead_Rx" - "WireX") between the coordinate position of the molten pool distal upper end and the coordinate position of the wire distal end in the X-axis direction, the "LeadW" being calculated as the difference ("Pool_Lead_Ry" - "Pool_Lead_Ly") between the coordinate position of the molten pool distal lower end and the coordinate position of the molten pool distal upper end in the Y-axis direction.

In S2005, the data processing device 800 performs abnormality detection using the time-series data composed of the geometric quantity data "LeadX", and the time-series data composed of the geometric quantity data "LeadW". Note that the means to perform abnormality detection may be set in advance. The type of disturbance has a wide variety, and the reason for misrecognition of a feature point and an unrecognizable feature point varies. For this problem, the inventors identify plural reasons for the occurrence of an abnormality of a feature point in advance, and provide a plurality of detection means in correspondence to the reasons, then determine an abnormality using the plurality of detection means in correspondence to the reasons for the occurrence of an abnormality. Thus, the inventors have found that an abnormality of a feature point caused by any disturbance can be determined with high accuracy.

In this embodiment, as detection means for "abnormality reason for feature point misrecognition", (1) means to detect an abnormality when the rate of detection in a predetermined interval (time period) is less than or equal to a threshold value is used. As shown in Fig. 19, regarding the rate of detection herein, when geometric quantity data cannot be calculated upon input of a welding image, the welding image is counted as an undetected welding image. As the detection means for "abnormality reason for feature point misrecognition", (2) means to detect an abnormality when a feature point is out of a range defined by a predetermined outlier identification method, and (3) means to detect an abnormality when feature point positions between frames of adjacent pieces of image data are different (separated) by a predetermined threshold value or more are used. Note that a configuration may be adopted in which at least one of these means is used. (2) the predetermined outlier identification method is, for example, a method of detecting an abnormality when a feature point is out of the applicable range of 3σ method using a Hampel identifier. Note that the plurality of abnormality detection means described above are an example, and other means may be used. Therefore, the combination of the abnormality detection means is not limited to what has been described above. Note that from the viewpoint of the accuracy of abnormality determination, it is preferable that a plurality of detection means be used, and it is more preferable that two or more combinations from (1) to (3) detection means be used.

In S2006, the data processing device 800 sets an abnormality graph based on the abnormality information detected by each abnormality detection means in S2005. In this embodiment, for the interval determined to be abnormal by at least one of the plurality of abnormality detection means, the value of an abnormality flag is set ON, and an ON signal is output. When the abnormality flag is ON, it indicates that an abnormality has occurred in a welding image corresponding to this timing.

In S2007, the data processing device 800 performs a process of removing the data in an abnormality flag ON signal interval. Note that removal of the data in an abnormality interval is an example, and a supplement process may be performed to replace the data in the abnormality flag ON signal interval with a predetermined value or the median of a predetermined range. Alternatively, when a supplement process is performed, to be removed value may be supplemented with the value in an immediately preceding interval of the abnormality flag ON signal interval, or a supplementing value may be changed according to the length of the ON signal interval. Furthermore, in order to reduce fine noise in the data after the removal, the data processing device 800 performs a smoothing process by applying a smoothing filter such as a moving average filter. The accuracy of automatic control is further improved by performing the smoothing process. Note that the smoothing process may be omitted depending on the result of the data removal. The details of the filtering process using a predetermined filter is not particularly limited, and may vary depending on the details of the data removal process or supplement process.

In S2008, the data processing device 800 calculates a correction signal based on the time-series data for which the process of removing the data in the abnormality interval has been performed in S2007. The calculation method here is not particularly limited, and for example, a correction signal indicating the amount of correction related to a welding speed and a welding voltage may be calculated in accordance with a pre-defined rule.

In S2009, the data processing device 800 outputs, to the robot control device 600, the correction signal calculated based on the determination information for disturbance.

In S2010, the data processing device 800 determines whether a stop command has been received from the robot control device 600. The stop command here corresponds to a welding stop command transmitted from the robot control device 600. When a stop command has not been received (NO in S2010), the process of the data processing device 800 returns to S2001. Meanwhile, when a stop command has been received (YES in S2010), the process flow is completed.

The application of the abnormality flag is not limited to the data removal mentioned above. The pattern of the abnormality flag may be analyzed, for example, analysis such as prediction may be made for the abnormality reason or the type of disturbance based on the period, and frequency of ON signal or OFF signal of the abnormality flag. In addition, alarm (issuance of an error) may be performed based on the analysis result, and correction may be made on various setting conditions. For example, when the number of ON signals of the abnormality flag in a predetermined period exceeds a predetermined threshold value, it is determined that large sputters frequently occur, and alarm may be issued to stop welding. When it is determined that large sputters frequently occur, control such as achieving arc stability may be performed by making correction to increase the set value of the arc voltage.

### [Example of Abnormality Determination]

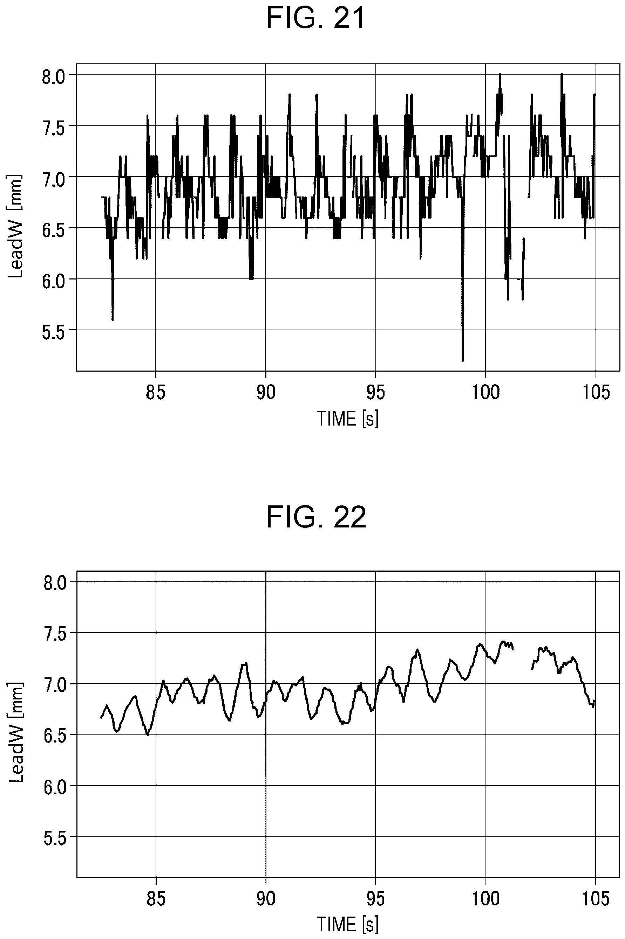

Hereinafter, a specific example of abnormality determination according to this embodiment will be described using Fig. 21 to Fig. 23.

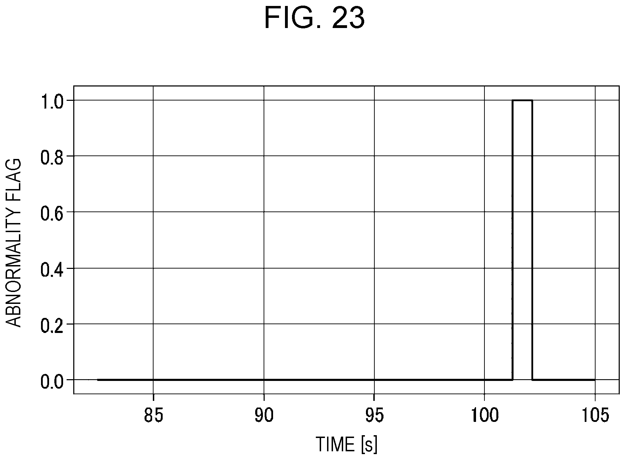

Fig. 21 illustrates the time-series data of the geometry quantity data LaedW which serves as input data in an abnormality determination process. Note that the time-series data at this time is in a raw data state where no editing has been performed. In Fig. 21, the horizontal axis indicates time [s], and the vertical axis indicates the value [mm] of LeadW. Fig. 22 illustrates the data after removing the data in the range determined to be abnormal as a result of the above-mentioned abnormality determination process. In Fig. 22, the horizontal axis indicates time [s], and the vertical axis indicates the value [mm] of LeadW. Fig. 23 illustrates the time-series data of the value of the abnormality flag in the above-mentioned abnormality determination process. In Fig. 23, the horizontal axis indicates time [s], and the vertical axis indicates the value (0 or 1) of the abnormality flag. The case where the value of the abnormality flag is 1 corresponds to the ON signal mentioned above. In Fig. 21 to Fig. 23, the time on the horizontal axes corresponds to each other.

According to Fig. 21 to Fig. 23, in the range where the value of the abnormality flag is 1 in Fig. 23, the value of the time-series data illustrated in Fig. 21 is removed, the data in the entire range is smoothed, and as a result, the time-series data as illustrated in Fig. 22 is obtained. Here, Fig. 22 shows an example in which the smoothing process is applied to clarify the transition of the graph.

Appropriate feature points may not be detected from the welding image at the timing when the above-mentioned abnormality has been identified. Thus, control may be performed so that as the correction signal at this timing, the correction signal obtained by the process of Fig. 20 is preferentially used over the correction signal calculated based the disturbance determination process (S1640) and the welding stability determination process (S1650) of Fig. 16 shown in the first embodiment.

As described so far, in addition to the effect of the first embodiment, this embodiment makes it possible to determine an abnormality of a feature point in the image data even under an environment where disturbance occurs.

### <Other Embodiments>

In the second embodiment, as illustrated in Fig. 8, welding information is acquired using the learned model, geometry quantity data is calculated by the calculating unit 819, and the abnormality determination process is performed on the time-series data of the geometry quantity data. However, without being limited to this, for example, the learning model may be configured to perform the learning process up to the abnormality determination to generate a learned model. In this case, the learning process may be configured to be performed with the learning data further including label information indicating an abnormality determination result. The label information here may be an abnormality flag, or a classification showing an abnormality cause. With this configuration, the learned model outputs label information for an input welding image, thereby making it possible to identify the portion where an abnormality has occurred and its abnormality cause for consecutive weld images. The calculating unit 819 may be configured to output a correction signal based on the label information which is an abnormality determination result output from the learned model. Alternatively, a learning process different from that of the learned model stated in the second embodiment may be performed, thus a learned model capable of outputting a result of label information mentioned above may be generated. In this case, output of the weld information, and output of the label information may each be performed using a plurality of learned models.

In the first embodiment, as illustrated in Fig. 8, welding information is acquired using the learned model, and calculation of geometry quantity data and disturbance determination process are performed by the calculating unit 819. However, without being limited to this configuration, for example, the learning model may be configured to perform the learning process up to the disturbance determination to generate a learned model. In this case, the learning process may be configured to be performed with the learning data further including a result of the disturbance determination, specifically, label information indicating appropriateness or inappropriateness of an image. With this configuration, the learned model outputs label information for an input welding image, thereby making it possible to determine whether a disturbance has occurred in the welding image. The calculating unit 819 may be configured to output a correction signal based on the label information which is an abnormality determination result output from the learned model. Alternatively, a learning process different from that of the learned model stated in the first embodiment may be performed, thus a learned model capable of outputting a result of label information mentioned above may be generated. In this case, output of the weld information, and output of the label information may each be performed using a plurality of learned models.

In the first embodiment, as illustrated in Fig. 8, welding information is acquired using the learned model, and calculation of geometry quantity data, disturbance determination process, and calculation of correction value are performed by the calculating unit 819. However, without being limited to this configuration, the learning model may be configured to perform the learning process up to the calculation of correction value to generate a learned model. In this case, the learning process may be configured to be performed with the learning data further including the amount of correction of a control parameter based on the content to be controlled in correspondence to a welding image. With this configuration, the learned model outputs the amount of correction related to welding for an input welding image. The calculating unit 819 may output the obtained amount of correction to the robot control device 600. Alternatively, a learning process different from that of the learned model stated in the first embodiment may be performed, thus a learned model capable of outputting the amount of correction mentioned above may be generated. In this case, output of the weld information, and output of the amount of correction may each be performed using a plurality of learned models.

In the present invention, a program, and an application to implement the functions of the one or more embodiments described above are supplied to a system or an apparatus using a network or a storage medium and the like, and the functions can also be implemented by a process of reading and executing a program by one or more processors in a computer of the system or the apparatus.

Alternatively, the functions may be implemented by a circuit that implements one or more functions. Note that as the circuit that implements one or more functions, for example, ASIC (Application Specific Integrated Circuit) and FPGA (Field Programmable Gate Array) may be mentioned.

As described above, the present specification discloses the following matters.
(1) A welding control method for welding to form a molten pool, the welding control method comprising:
   an acquisition step for acquiring image data including the molten pool;
   an identifying step for identifying, based on the acquired image data, a plurality of feature points near a boundary between the molten pool and an unmolten portion at least on a side in a welding travel direction;
   a calculating step for calculating geometric quantity data based on information about the plurality of feature points;
   a determining step for determining whether a weld is appropriate or inappropriate based on the geometric quantity data and a predetermined threshold value; and
   a correcting step for correcting a welding condition based on a result of the determination in the determining step.
   With this configuration, welding quality can be ensured, and automatic welding with good welding work efficiency can be achieved even in a welding situation where disturbance occurs.
(2) The welding control method according to (1),
   wherein the plurality of feature points are identified from positions of both ends on a groove surface of the boundary, or a most forward position of the molten pool in a welding direction on the boundary.
   With this configuration, appropriateness or inappropriateness of weld can be determined using the feature points around the boundary of the molten pool.
(3) The welding control method according to (1) or (2),
   wherein in the calculating step, geometric quantity data of at least one of angle, curvature, distance, or area is calculated using the information about the plurality of feature points.
   With this configuration, appropriateness or inappropriateness of weld can be determined based on various pieces of geometry quantity data identified from the plurality of feature points.
(4) The welding control method according to any one of (1) to (3),
   wherein when weaving is used at time of the weld, in the calculating step, geometric quantity data is calculated based on the information about the plurality of feature points in a predetermined range of movement from a predetermined weaving end point to the other weaving end point.
   With this configuration, feature points can be identified in consideration of the effect of the weaving.
(5) The welding control method according to any one of (1) to (4),
   wherein in the correcting step, the welding condition to be corrected includes at least a weld current, an arc voltage, or a condition for weaving, and
   the condition for weaving includes at least one of a weaving width, a weaving frequency, an end stop time, a speed between both ends, or a weaving trajectory.
   With this configuration, weld current, arc voltage, or conditions for weaving, can be controlled according to appropriateness or inappropriateness of weld.
(6) The welding control method according to any one of (1) to (5),
   wherein the threshold value is a value defined based on a predetermined fixed value, or at least one of a gap of a groove or a misalignment amount.
   With this configuration, a threshold value to determine appropriateness or inappropriateness of weld can be set in any manner.
(7) The welding control method according to any one of (1) to (6), further comprising:
   an abnormality detection step for detecting abnormality for time-series data composed of the geometric quantity data by using one or a plurality of abnormality detection means that are predetermined in correspondence to an abnormality reason; and
   a second determining step for determining an occurrence of an abnormality in the time-series data based on a detection result by the one or plurality of abnormality detection means,
   wherein in the correcting step, the welding condition is further corrected based on a result of the determination in the second determining step.
   With this configuration, the occurrence of abnormality caused by a disturbance can be determined, and the welding conditions can be corrected according to a result of the determination.
(8) The welding control method according to (7),
   wherein the one or plurality of abnormality detection means include at least one of:
   means to determine whether a rate of detection of a feature point in one or a plurality of pieces of image data in a predetermined time is lower than or equal to a threshold value due to the abnormality reason of failure of recognition of a feature point from the image data;
   means to determine whether a feature point is out of a range defined by a predetermined outlier identification method due to the abnormality reason of misrecognition of a feature point from the image data; and
   means to determine whether a position between corresponding feature points recognized in adjacent pieces of image data is greater than or equal to a threshold value due to the abnormality reason of misrecognition of a feature point from the image data.
   With this configuration, an abnormality determination can be made in correspondence to various abnormality reasons caused by disturbances included in the image data.
(9) The welding control method according to (8),
   wherein the geometric quantity data is at least one of coordinates of one or a plurality of feature points, a distance between the plurality of feature points, which are obtained from one object, an area formed by a plurality of feature points obtained from one object, and a distance between feature points in different objects, the one object and the different objects being included in the image data.
   With this configuration, an abnormality determination can be made using geometry quantity data which captures the characteristics of each object identified from the image data.
(10) The welding control method according to any one of (1) to (9),
   wherein in the identifying step, the information about the one or plurality of feature points is acquired from the image data using a learned model, and
   for the learned model, a learning process is performed using learning data in which image data is associated with the information about the feature points acquired from the image data so that the learned model is configured to, for input of image data, output the information about the feature points associated with the image data.
   With this configuration, feature points in the image data can be acquired using the learned model.
(11) The welding control method according to any one of (1) to (9),
   wherein in the determining step, label information indicating appropriateness or inappropriateness of weld is acquired using a learned model,
   in the determining step, whether the weld is appropriate or inappropriate is determined based on the label information, and
   for the learned model, a learning process is performed using learning data in which image data, information about feature points acquired from the image data, and the label information indicating appropriateness or inappropriateness of weld shown in the image data are associated with each other so that the learned model is configured to, for input of image data, output the label information indicating appropriateness or inappropriateness of weld shown in the image data.
   With this configuration, appropriateness or inappropriateness of weld based on the image data can be acquired using the learned model.
(12) The welding control method according to any one of (1) to (9),
   wherein in the determining step, a correction value on a welding condition is acquired using a learned model, and
   for the learned model, a learning process is performed using learning data in which image data, information about feature points acquired from the image data, and an amount of correction according to appropriateness or inappropriateness of weld shown in the image data are associated with each other so that the learned model is configured to, for input of image data, output the amount of correction according to appropriateness or inappropriateness of weld shown in the image data.
   With this configuration, using the learned model, it is possible to acquire an amount of correction on welding conditions according to a result of determination of appropriateness or inappropriateness of weld based on the image data.
(13) A control device for controlling welding condition for welding to form a molten pool, the control device comprising:
   an acquisition unit configured to acquire image data including the molten pool;
   an identifying unit configured to identify, based on the acquired image data, a plurality of feature points near a boundary between the molten pool and an unmolten portion at least on a side in a welding travel direction;
   a calculating unit configured to calculate geometric quantity data based on information about the plurality of feature points;
   a determining unit configured to determine whether a weld is appropriate or inappropriate based on the geometric quantity data and a predetermined threshold value; and
   a correcting unit configured to correct a welding condition based on a result of the determination by the determining unit.
   With this configuration, welding quality can be ensured, and automatic welding with good welding work efficiency can be achieved even in a welding situation where disturbance occurs.
(14) A welding system comprising the control device according to (13).
   With this configuration, it is possible to provide a welding system that can ensure welding quality and achieve automatic welding with good welding work efficiency even in a welding situation where disturbance occurs.
(15) A program causing a computer to execute a process comprising:
   an acquisition step for acquiring image data including a molten pool which is generated at time of welding;
   an identifying step for identifying, based on the acquired image data, a plurality of feature points near a boundary between the molten pool and an unmolten portion at least on a side in a welding travel direction;
   a calculating step for calculating geometric quantity data based on information about the plurality of feature points;
   a determining step for determining whether a weld is appropriate or inappropriate based on the geometric quantity data and a predetermined threshold value; and
   a correcting step for correcting welding condition based on a result of the determination in the determining step.
   With this configuration, welding quality can be ensured, and automatic welding with good welding work efficiency can be achieved even in a welding situation where disturbance occurs.
(16) A welding method comprising a control step for performing welding using a welding condition corrected by the welding control method according to any one of (1) to (12).

With this configuration, it is possible to provide a welding method that can ensure welding quality and achieve automatic welding with good welding work efficiency even in a welding situation where disturbance occurs.

Although various embodiments have been described above, it is needless to say that the present invention is not limited to those examples. It is apparent that various modification examples and alteration examples will occur to those skilled in the art within the scope described in the appended claims, and it should be understood that those examples naturally fall within the technical scope of the present invention. In a range without departing from the spirit of the invention, the components in the above embodiments may be combined in any manner.

The present application is based on Japanese Patent Application (No. 2022-057504) filed on March 30, 2022, the entire contents of which are incorporated herein by reference.

### Reference Signs List

- 50: welding system
- 100: portable welding robot
- 200: welding torch
- 211: welding wire
- 300: feeding device
- 400: welding power supply
- 500: shielding gas supply source
- 600: robot control device
- 700: visual sensor
- 800: data processing device
- 810: body
- 811: CPU
- 812: GPU
- 813: ROM
- 814: RAM
- 815: non-volatile storage device
- 815A: learning program
- 815B: learned model
- 815C: information generation program
- 815D: image data
- 816: input-output interface
- 817: communication interface
- 818: video output interface
- 819: calculating unit
- 820: input unit
- 830: display
- W: work

## Claims

1. A welding control method for welding to form a molten pool, the welding control method comprising:
an acquisition step for acquiring image data including the molten pool;
an identifying step for identifying, based on the acquired image data, a plurality of feature points near a boundary between the molten pool and an unmolten portion at least on a side in a welding travel direction;
a calculating step for calculating geometric quantity data based on information about the plurality of feature points;
a determining step for determining whether a weld is appropriate or inappropriate based on the geometric quantity data and a predetermined threshold value; and
a correcting step for correcting a welding condition based on a result of the determination in the determining step.

2. The welding control method according to claim 1,
wherein the plurality of feature points are identified from positions of both ends on a groove surface of the boundary, or a most forward position of the molten pool in a welding direction on the boundary.

3. The welding control method according to claim 1,
wherein in the calculating step, geometric quantity data of at least one of angle, curvature, distance, or area is calculated using the information about the plurality of feature points.

4. The welding control method according to claim 1,
wherein when weaving is used at time of the weld, in the calculating step, geometric quantity data is calculated based on the information about the plurality of feature points in a predetermined range of movement from a predetermined weaving end point to the other weaving end point.

5. The welding control method according to claim 1,
wherein in the correcting step, the welding condition to be corrected includes at least a weld current, an arc voltage, or a condition for weaving, and the condition for weaving includes at least one of a weaving width, a weaving frequency, an end stop time, a speed between both ends, or a weaving trajectory.

6. The welding control method according to claim 1,
wherein the threshold value is a value defined based on a predetermined fixed value, or at least one of a gap of a groove or a misalignment amount.

7. The welding control method according to claim 1, further comprising:
an abnormality detection step for detecting abnormality for time-series data composed of the geometric quantity data by using one or a plurality of abnormality detection means that are predetermined in correspondence to an abnormality reason; and
a second determining step for determining an occurrence of an abnormality in the time-series data based on a detection result by the one or plurality of abnormality detection means,
wherein in the correcting step, the welding condition is further corrected based on a result of the determination in the second determining step.

8. The welding control method according to claim 7,
wherein the one or plurality of abnormality detection means include at least one of:
means to determine whether a rate of detection of a feature point in one or a plurality of pieces of image data in a predetermined time is lower than or equal to a threshold value due to the abnormality reason of failure of recognition of a feature point from the image data;
means to determine whether a feature point is out of a range defined by a predetermined outlier identification method due to the abnormality reason of misrecognition of a feature point from the image data; and
means to determine whether a position between corresponding feature points recognized in adjacent pieces of image data is greater than or equal to a threshold value due to the abnormality reason of misrecognition of a feature point from the image data.

9. The welding control method according to claim 8,
wherein the geometric quantity data is at least one of coordinates of one or a plurality of feature points, a distance between the plurality of feature points, which are obtained from one object, an area formed by a plurality of feature points obtained from one object, and a distance between feature points in different objects, the one object and the different objects being included in the image data.

10. The welding control method according to any one of claims 1 to 9,
wherein in the identifying step, the information about the one or plurality of feature points is acquired from the image data using a learned model, and
for the learned model, a learning process is performed using learning data in which image data is associated with the information about the feature points acquired from the image data so that the learned model is configured to, for input of image data, output the information about the feature points associated with the image data.

11. The welding control method according to any one of claims 1 to 9,
wherein in the determining step, label information indicating appropriateness or inappropriateness of weld is acquired using a learned model,
in the determining step, whether the weld is appropriate or inappropriate is determined based on the label information, and
for the learned model, a learning process is performed using learning data in which image data, information about feature points acquired from the image data, and the label information indicating appropriateness or inappropriateness of weld shown in the image data are associated with each other so that the learned model is configured to, for input of image data, output the label information indicating appropriateness or inappropriateness of weld shown in the image data.

12. The welding control method according to any one of claims 1 to 9,
wherein in the determining step, a correction value on a welding condition is acquired using a learned model, and
for the learned model, a learning process is performed using learning data in which image data, information about feature points acquired from the image data, and an amount of correction according to appropriateness or inappropriateness of weld shown in the image data are associated with each other so that the learned model is configured to, for input of image data, output the amount of correction according to appropriateness or inappropriateness of weld shown in the image data.

13. A control device for controlling welding condition for welding to form a molten pool, the control device comprising:
an acquisition unit configured to acquire image data including the molten pool;
an identifying unit configured to identify, based on the acquired image data, a plurality of feature points near a boundary between the molten pool and an unmolten portion at least on a side in a welding travel direction;
a calculating unit configured to calculate geometric quantity data based on information about the plurality of feature points;
a determining unit configured to determine whether a weld is appropriate or inappropriate based on the geometric quantity data and a predetermined threshold value; and
a correcting unit configured to correct a welding condition based on a result of the determination by the determining unit.

14. A welding system comprising a control device for controlling welding condition for welding to form a molten pool, the control device comprising:
an acquisition unit configured to acquire image data including the molten pool;
an identifying unit configured to identify, based on the acquired image data, a plurality of feature points near a boundary between the molten pool and an unmolten portion at least on a side in a welding travel direction;
a calculating unit configured to calculate geometric quantity data based on information about the plurality of feature points;
a determining unit configured to determine whether a weld is appropriate or inappropriate based on the geometric quantity data and a predetermined threshold value; and
a correcting unit configured to correct a welding condition based on a result of the determination by the determining unit.

15. A program causing a computer to execute a process comprising:
an acquisition step for acquiring image data including a molten pool which is generated at time of welding;
an identifying step for identifying, based on the acquired image data, a plurality of feature points near a boundary between the molten pool and an unmolten portion at least on a side in a welding travel direction;
a calculating step for calculating geometric quantity data based on information about the plurality of feature points;
a determining step for determining whether a weld is appropriate or inappropriate based on the geometric quantity data and a predetermined threshold value; and
a correcting step for correcting welding condition based on a result of the determination in the determining step.

16. A welding method comprising a control step for performing welding using a welding condition corrected by a welding control method for welding to form a molten pool,
the welding control method comprising:
an acquisition step for acquiring image data including the molten pool;
an identifying step for identifying, based on the acquired image data, a plurality of feature points near a boundary between the molten pool and an unmolten portion at least on a side in a welding travel direction;
a calculating step for calculating geometric quantity data based on information about the plurality of feature points;
a determining step for determining whether a weld is appropriate or inappropriate based on the geometric quantity data and a predetermined threshold value; and
a correcting step for correcting a welding condition based on a result of the determination in the determining step.
